# EUROPEAN PATENT APPLICATION

(11) **EP 4 780 051 A1**
(43) Date of publication of application: **22.07.2026**
(21) Application number: 24871025.3
(22) Date of filing: 27.09.2024
(51) Int. Cl.: H04W 24/02, G06N 5/04

(54) **COMMUNICATION METHOD AND APPARATUS**

(30) Priority: 28.09.2023 CN 202311286458
(71) Applicant: HUAWEI TECHNOLOGIES CO., LTD., Shenzhen 518129 (CN)
(72) Inventor: GUO, Tao, Shenzhen, Guangdong 518129 (CN); SUN, Haiyang, Shenzhen, Guangdong 518129 (CN)
(74) Representative: Maiwald GmbH
(86) International application number: PCT/CN2024/121927
(87) International publication number: WO 2025/067490

(57) **Abstract**

This application belongs to the field of communication technologies, and provides a communication method and apparatus, to obtain a model. In this method, an AnLF functional entity may determine, by determining that a first notification message carries first indication information, to obtain a first model. For example, when the first notification message is used to provide an updated model, the first notification message may carry the first indication information indicating that the first model is updated, so that the AnLF functional entity determines, based on the first indication information, that the first model is updated, that is, determines to obtain the first model. For another example, when the first notification message is used to provide a new model or an updated model, the first notification message may carry the first indication information indicating that an MTLF functional entity provides the model, so that the AnLF functional entity determines, based on the first indication information, that the first model needs to be obtained, and obtains the first model. In this way, the AnLF functional entity can obtain the first model when determining that the first model needs to be obtained.

## Description

This application claims priority to Chinese Patent Application No. 202311286458.3, filed with the China National Intellectual Property Administration on September 28, 2023 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

Currently, in a network architecture of a 5th generation (5th generation, 5G) mobile communication system, a model (for example, a machine learning (machine learning, ML) model) may be provided to perform an operation like data analytics. For example, in a sensing scenario, data analytics may be performed on sensing data by using a model, to obtain a sensing result. The sensing result is used to adjust and improve network operation efficiency and improve system performance.

However, how to obtain the model is a hot topic in current discussion.

### SUMMARY

Embodiments of this application provide a communication method and apparatus, to obtain a model.

To achieve the foregoing objective, the following technical solutions are used in this application.

According to a first aspect, a communication method is provided. The method includes: An analytics logical function AnLF functional entity receives a first notification message from a model training logical function MTLF functional entity, and performs an operation for obtaining a first model when the first notification message further carries first indication information. The first notification message carries a model identifier, and the model identifier indicates the first model. The first indication information indicates that the first model is updated, or the first indication information indicates that the MTLF functional entity provides the first model.

It can be learned from the method according to the first aspect that the AnLF functional entity may determine, by determining that the first notification message carries the first indication information, to obtain the first model, and perform the operation for obtaining the first model. For example, when the first notification message is used to provide an updated model, the first notification message may carry the first indication information indicating that the first model is updated, so that the AnLF functional entity can determine, based on the first indication information, that the first model is updated, that is, determine to obtain the first model. For another example, when the first notification message is used to provide a new model or an updated model, the first notification message may carry the first indication information indicating that the MTLF functional entity provides the first model, so that the AnLF functional entity can determine, based on the first indication information, that the first model needs to be obtained, and obtain the first model. In this way, the AnLF functional entity can obtain the first model when determining that the first model needs to be obtained.

In a possible design solution, the method according to the first aspect further includes: The AnLF functional entity skips performing the operation for obtaining the first model when the first notification message does not carry the first indication information. It may be understood that, that the first notification message does not carry the first indication information may indicate that the first model is not updated, or the first model has been provided for the AnLF functional entity. In this case, the AnLF functional entity does not need to obtain the first model. In this way, the AnLF functional entity can be prevented from repeatedly obtaining the first model, so that a behavior of obtaining the first model by the AnLF functional entity is effective, and overheads of the AnLF functional entity are reduced.

Optionally, that the AnLF functional entity skips performing the operation for obtaining the first model when the first notification message does not carry the first indication information includes: The AnLF functional entity skips performing the operation for obtaining the first model when the first notification message does not carry the first indication information or indication information indicating that a message type is a model delivery notification message. The model delivery notification message may be understood as a message used to provide a model for the AnLF functional entity for the first time, namely, a message used to provide a new model. In other words, when the first indication information indicates that the first model is updated, that the first notification message does not carry the first indication information or the indication information may indicate that the first notification message does not provide a new model or an updated model. In this case, the AnLF functional entity does not need to obtain the first model, that is, skips performing the operation for obtaining the first model. In this way, the AnLF functional entity can be prevented from repeatedly obtaining the first model, so that a behavior of obtaining the first model by the AnLF functional entity is effective, and overheads of the AnLF functional entity are reduced.

In a possible design solution, that the first indication information indicates that the first model is updated specifically includes: The first indication information indicates that a message type of the first notification message is a model update notification message. That is, the first indication information may indicate, by indicating the type of the first notification message, that the first model is updated.

Optionally, that the AnLF functional entity performs the operation for obtaining the first model when the first notification message carries the first indication information includes: The AnLF functional entity determines, based on the first indication information, that the message type of the first notification message is the model update notification message. The AnLF functional entity performs, based on the model identifier and the message type of the first notification message being the model update notification message, the operation for obtaining the first model. In other words, when the first indication information indicates that the message type of the first notification message is the model update notification message, the AnLF functional entity may determine the type of the first notification message based on the first indication information carried in the first notification message; and when determining that the message type of the first notification message is the model update notification message, determine that the first model is updated, and obtain the first model.

In a possible design solution, the method according to the first aspect further includes: The AnLF functional entity receives a second notification message from the MTLF functional entity. The second notification message carries the model identifier and second indication information, and the second indication information indicates that a message type of the second notification message is a model delivery notification message. In other words, the second notification message may be used to provide a model when the AnLF functional entity has not obtained the model. In this way, after receiving the second notification message, the AnLF functional entity may determine, based on the second indication information, to obtain the model, and obtain the model.

Optionally, after the AnLF functional entity receives the second notification message from the MTLF functional entity, the method according to the first aspect further includes: The AnLF functional entity determines, based on the second indication information, that the message type of the second notification message is the model delivery notification message. The AnLF functional entity performs, based on the model identifier and the message type of the second notification message being the model delivery notification message, the operation for obtaining the first model. In other words, when the second indication information indicates that the message type of the second notification message is the model delivery notification message, the AnLF functional entity may determine the type of the second notification message based on the second indication information carried in the second notification message; and when determining that the message type of the second notification message is the model delivery notification message, obtain the first model.

In a possible design solution, the method according to the first aspect further includes: The AnLF functional entity receives a third notification message from the MTLF functional entity. The third notification message carries the model identifier and third indication information, and the third indication information indicates that a message type of the third notification message is a model accuracy notification message. The AnLF functional entity skips performing, based on the third indication information, the operation for obtaining the first model. It may be understood that the model accuracy notification message is used to notify accuracy information of the model. That is, in this case, the first model is not updated, and the AnLF functional entity does not need to obtain the first model. In other words, after receiving the third notification message, the AnLF functional entity may determine, based on the third indication information, that the message type of the third notification message is the model accuracy notification message, that is, the first model is not repeatedly obtained, so that the AnLF functional entity can be prevented from repeatedly obtaining the first model, to reduce overheads of the AnLF functional entity.

In a possible design solution, the operation for obtaining the first model is sending a request message for obtaining the first model.

In a possible design solution, the first model is a model obtained by updating a second model, the model identifier of the first model is the same as a model identifier of the second model, and the first model is a model re-trained based on the second model, or the first model is a newly generated model.

In a possible design solution, the model identifier is an ID and/or a uniform resource locator URL that are/is of the first model. Different model identifiers may be selected based on actual situations. This is not limited in embodiments of this application.

According to a second aspect, a communication method is provided. The method includes: A model training logical function MTLF functional entity obtains a first notification message, and sends the first notification message to an analytics logical function AnLF functional entity. The first notification message carries a model identifier, and the model identifier indicates a first model. When the first model is updated, the first notification message carries first indication information, and the first indication information indicates that the first model is updated; or when the MTLF functional entity provides the first model, the first notification message carries first indication information, and the first indication information indicates that the MTLF functional entity provides the first model.

In a possible design solution, when the first model is not updated, a second notification message does not carry the first indication information; or when the MTLF functional entity does not provide the first model, the first notification message does not carry the first indication information.

In a possible design solution, that the first indication information indicates that the first model is updated specifically includes: The first indication information indicates that a message type of the first notification message is a model update notification message.

In a possible design solution, the method according to the second aspect further includes: The MTLF functional entity sends a second notification message to the AnLF functional entity. The second notification message carries the model identifier and second indication information, and the second indication information indicates that a message type of the second notification message is a model delivery notification message.

In a possible design solution, the method according to the second aspect further includes: The MTLF functional entity sends a third notification message to the AnLF functional entity. The third notification message carries the model identifier and third indication information, and the third indication information indicates that a message type of the third notification message is a model accuracy notification message.

In a possible design solution, the first model is a model obtained by updating a second model, the model identifier of the first model is the same as a model identifier of the second model, and the first model is a model re-trained based on the second model, or the first model is a newly generated model.

In a possible design solution, the model identifier is an ID and/or a uniform resource locator URL that are/is of the first model.

In addition, for technical effects of the method according to the second aspect, refer to the technical effects of the method according to the first aspect. Details are not described herein again.

According to a third aspect, a communication method is provided. The method includes: An analytics logical function AnLF functional entity receives a first notification message from a model training logical function MTLF functional entity. When determining that a first model exists, the AnLF functional entity skips performing an operation for obtaining the first model; and/or when determining that a first model does not exist, the AnLF functional entity performs an operation for obtaining the first model. The first notification message carries a first model identifier, and the first model identifier indicates the first model.

It can be learned from the method according to the third aspect that the AnLF functional entity may determine, based on whether the first model corresponding to the first model identifier exists, whether the AnLF functional entity obtains the first model. To be specific, when the AnLF functional entity determines that the first model exists, a function of the first notification message is to provide accuracy information of the first model. In this case, the AnLF functional entity does not need to obtain the first model, that is, the AnLF functional entity skips performing the operation for obtaining the first model. Correspondingly, when the AnLF functional entity determines that the first model does not exist, the first notification message is used to provide a new model or an updated model. In this case, the AnLF functional entity needs to obtain the first model, that is, the AnLF functional entity performs the operation for obtaining the first model. It can be learned that, after receiving the first notification message, the AnLF functional entity may obtain or not obtain the first model based on different situations. That is, the AnLF functional entity can obtain the first model when the AnLF functional entity needs to obtain the first model. In addition, when the first model exists, the AnLF functional entity may not obtain the first model. In this way, the AnLF functional entity can be prevented from repeatedly obtaining the first model, to reduce overheads of the AnLF functional entity.

In a possible design solution, the method according to the third aspect further includes: The AnLF functional entity receives a second notification message from the MTLF functional entity. When determining that the first model does not exist, the AnLF functional entity performs the operation for obtaining the first model. The AnLF functional entity stores the first model and/or the first model identifier. The second notification message carries the first model identifier. It may be understood that, the AnLF functional entity may determine, based on whether a model or a model identifier of the model is stored, whether the model exists. In other words, after obtaining the first model, the AnLF functional entity stores the first model and/or the first model identifier, so that after receiving a notification carrying the first model identifier again, the AnLF functional entity determines, by determining that the first model and/or the first model identifier are/is stored, that the first model has been obtained. In other words, the AnLF functional entity does not need to obtain the first model.

Optionally, the determining that the first model exists specifically includes: The AnLF functional entity determines, based on the stored first model or first model identifier, that the first model exists. That is, the AnLF functional entity may determine, by determining that the first model or the first model identifier is stored, that the first model exists, that is, determine that the first model has been obtained.

In a possible design solution, the first notification message further carries first accuracy information of the first model. In this case, after receiving the first notification message, the AnLF functional entity may directly obtain the first accuracy information, and does not need to obtain the first accuracy information from another place, to reduce overheads of the AnLF functional entity.

Optionally, when it is determined that the first model does not exist, the method according to the third aspect further includes: The AnLF functional entity obtains first accuracy information.

Optionally, when it is determined that the first model exists, the method according to the third aspect further includes: The AnLF functional entity determines that the first notification message is a message indicating accuracy information of the first model. In this case, the AnLF functional entity may not obtain the first model based on the first notification message being the message indicating the accuracy information of the first model, that is, skip performing the operation for obtaining the first model, to reduce overheads of the AnLF functional entity.

Further, that the AnLF functional entity determines that the first notification message is the message indicating the accuracy information of the first model includes: The AnLF functional entity obtains only the first accuracy information. In other words, in this case, the AnLF functional entity does not obtain the first model, that is, skips performing the operation for obtaining the first model, to reduce overheads of the AnLF functional entity.

In a possible design solution, the first model identifier is a model ID and/or a uniform resource locator URL that are/is of the first model.

According to a fourth aspect, a communication method is provided. The method includes: An analytics logical function AnLF functional entity receives a first notification message from a model training logical function MTLF functional entity. The AnLF functional entity determines that a first model does not exist, and performs an operation for obtaining the first model. The first notification message carries a first model identifier, and the first model identifier indicates the first model.

It can be learned from the method according to the fourth aspect that the determining that the first model does not exist may indicate that the first model has not been obtained or has not been stored. That is, in this case, the first notification message is used to provide the first model. In other words, in this case, the AnLF functional entity needs to obtain the first model. Therefore, when the AnLF functional entity determines that the first model does not exist, the AnLF functional entity performs the operation for obtaining the first model, to obtain the first model. In this way, the AnLF functional entity can obtain a model when determining that the model needs to be obtained.

In a possible design solution, after the AnLF functional entity performs the operation for obtaining the first model, the method according to the fourth aspect further includes: The AnLF functional entity stores the first model and/or the first model identifier.

Optionally, the method according to the fourth aspect further includes: The AnLF functional entity receives a second notification message from the MTLF functional entity. The AnLF functional entity determines that the first model exists. The AnLF functional entity skips performing the operation for obtaining the first model. The second notification message carries the first model identifier. It may be understood that the determining that the first model exists may indicate that the first model has been obtained. That is, in this case, the second notification message is used to provide accuracy information of the first model. In other words, in this case, the AnLF functional entity does not need to repeatedly obtain the first model. Therefore, when the AnLF functional entity determines that the first model exists, the AnLF functional entity skips performing the operation for obtaining the first model, so that repeated obtaining of the first model can be avoided, and overheads of the AnLF functional entity can be reduced.

Further, that the AnLF functional entity determines that the first model exists includes: The AnLF functional entity determines, based on a stored first model or first model identifier, that the first model exists.

In a possible design solution, the first notification message further carries first accuracy information of the first model.

Optionally, when the AnLF functional entity determines that the first model does not exist, the method according to the fourth aspect further includes: The AnLF functional entity obtains the first accuracy information.

Optionally, when the AnLF functional entity determines that the first model exists, the method according to the fourth aspect further includes: The AnLF functional entity determines that the second notification message is a message indicating the accuracy information of the first model.

Further, that the AnLF functional entity determines that the second notification message is the message indicating the accuracy information of the first model includes: The AnLF functional entity obtains only the first accuracy information.

In a possible design solution, the first model identifier is a model ID and/or a uniform resource locator URL that are/is of the first model.

In addition, for other technical effects of the method according to the fourth aspect, refer to the technical effects of the method according to the third aspect. Details are not described herein again.

According to a fifth aspect, a communication method is provided. The method includes: A model training logical function MTLF functional entity sends a first notification message to an analytics logical function AnLF functional entity. The MTLF functional entity determines a second notification message, and sends the second notification message to the AnLF functional entity. The first notification message carries a first model identifier, and the first model identifier indicates a first model. The second notification message carries a second model identifier, and the second model identifier indicates a second model. When the second model is an updated first model, the second model identifier is different from the first model identifier.

It can be learned from the method according to the fifth aspect that, when providing an updated model for the AnLF functional entity, the MTLF functional entity may provide a model identifier different from a previously provided model, so that after receiving a notification message, the AnLF functional entity may determine, based on a model identifier carried in the notification message being different from the previous model identifier, to obtain a model corresponding to the model identifier carried in the notification message. In this way, the AnLF functional entity can obtain a model when determining that the model needs to be obtained.

In a possible design solution, when the second model is the first model, the second model identifier is the same as the first model identifier. In other words, in this case, the second notification message is used to provide accuracy information of the first model, that is, the second notification message is not used to provide the first model. The first model identifier is carried in the second notification message, so that after receiving the second notification message, the AnLF functional entity can determine, based on the model identifier carried in the notification message being the same as the previous model identifier, not to obtain the first model. In this way, the AnLF functional entity can be prevented from repeatedly obtaining the first model, to reduce overheads of the AnLF functional entity.

In a possible design solution, the second model identifier is a model ID and/or a uniform resource locator URL that are/is of the second model.

In addition, for other technical effects of the method according to the fifth aspect, refer to the technical effects of the method according to the third aspect. Details are not described herein again.

According to a sixth aspect, a communication method is provided. The method includes: An analytics data repository function ADRF functional entity receives, from a model training logical function MTLF functional entity, a request for requesting to configure a uniform resource locator URL for a second model. The ADRF functional entity configures the URL for the second model based on the request for requesting to configure the URL for the second model. The URL of the second model is different from a URL of a first model, and the second model is a model obtained by updating the first model.

It can be learned from the method according to the sixth aspect that the ADRF functional entity may configure different URLs for different models, so that the AnLF functional entity can determine, based on a URL of a model (denoted as a model #m) carried in a received notification message being different from a URL of a previously obtained model, that the model #m is a model that needs to be obtained, to obtain the model #m. In this way, the AnLF functional entity can obtain a model when determining that the model needs to be obtained.

According to a seventh aspect, a communication apparatus is provided. The communication apparatus includes a module configured to perform the method according to any one of the possible implementations of the first aspect to the sixth aspect, for example, a transceiver module and a processing module. For example, the transceiver module indicates receiving and sending functions of the communication apparatus, and the processing module is configured to perform a function of the communication apparatus other than the receiving and sending functions.

Optionally, the transceiver module may include a sending module and a receiving module. The sending module is configured to implement the sending function of the communication apparatus according to the seventh aspect, and the receiving module is configured to implement the receiving function of the communication apparatus according to the seventh aspect.

Optionally, the communication apparatus according to the seventh aspect may further include a storage module. The storage module stores a program or instructions. When the processing module executes the program or the instructions, the communication apparatus may be caused to perform the method according to any one of the possible implementations of the first aspect to the sixth aspect.

It may be understood that the communication apparatus according to the seventh aspect may be a network device, or may be a chip (system) or another part or component that may be disposed in the network device, or may be an apparatus containing the network device. This is not limited in this application.

In addition, for technical effects of the communication apparatus according to the seventh aspect, refer to the technical effects of the method according to any one of the possible implementations of the first aspect to the sixth aspect. Details are not described herein again.

According to an eighth aspect, a communication apparatus is provided. The communication apparatus includes a processor. The processor is configured to perform the method according to any one of the possible implementations of the first aspect to the sixth aspect.

In a possible design solution, the communication apparatus according to the eighth aspect may further include a transceiver. The transceiver may be a transceiver circuit or an interface circuit. The transceiver may be used by the communication apparatus according to the eighth aspect to communicate with another communication apparatus.

In a possible design solution, the communication apparatus according to the eighth aspect may further include a memory. The memory and the processor may be integrated together, or may be disposed separately. The memory may be configured to store a computer program and/or data related to the method according to any one of the possible implementations of the first aspect to the sixth aspect.

In embodiments of this application, the communication apparatus according to the eighth aspect may be a network device, or a chip (system) or another part or component in the network device, or an apparatus containing the network device.

In addition, for technical effects of the communication apparatus according to the eighth aspect, refer to the technical effects of the method according to any one of the possible implementations of the first aspect to the sixth aspect. Details are not described herein again.

According to a ninth aspect, a communication apparatus is provided. The communication apparatus includes a processor. The processor is coupled to a memory. The processor is configured to execute a computer program stored in the memory, to cause the communication apparatus to perform the method according to any one of the possible implementations of the first aspect to the sixth aspect.

In a possible design solution, the communication apparatus according to the ninth aspect may further include a transceiver. The transceiver may be a transceiver circuit or an interface circuit. The transceiver may be used by the communication apparatus according to the ninth aspect to communicate with another communication apparatus.

In embodiments of this application, the communication apparatus according to the ninth aspect may be a network device, or a chip (system) or another part or component that may be disposed in the network device, or an apparatus containing the network device.

In addition, for technical effects of the communication apparatus according to the ninth aspect, refer to the technical effects of the method according to any one of the possible implementations of the first aspect to the sixth aspect. Details are not described herein again.

According to a tenth aspect, a communication apparatus is provided, and includes a processor and a memory. The memory is configured to store a computer program. When the processor executes the computer program, the communication apparatus is caused to perform the method according to any one of the possible implementations of the first aspect to the sixth aspect.

In a possible design solution, the communication apparatus according to the tenth aspect may further include a transceiver. The transceiver may be a transceiver circuit or an interface circuit. The transceiver may be used by the communication apparatus according to the tenth aspect to communicate with another communication apparatus.

In embodiments of this application, the communication apparatus according to the tenth aspect may be a network device, or a chip (system) or another part or component that may be disposed in the network device, or an apparatus containing the network device.

In addition, for technical effects of the communication apparatus according to the tenth aspect, refer to the technical effects of the method according to any one of the possible implementations of the first aspect to the sixth aspect. Details are not described herein again.

According to an eleventh aspect, a communication system is provided. The communication includes an AnLF functional entity configured to perform the method according to the first aspect, and/or a model training logical function MTLF functional entity configured to perform the method according to the second aspect.

According to a twelfth aspect, a communication chip is provided. The communication chip stores instructions. When the chip runs on a communication device, the method according to any one of the implementations of the first aspect to the sixth aspect is implemented.

According to a thirteenth aspect, a computer-readable storage medium is provided, and includes a computer program or instructions. When the computer program or the instructions are run on a computer, the computer is caused to perform the method according to any one of the possible implementations of the first aspect to the sixth aspect.

According to a fourteenth aspect, a computer program product is provided, and includes a computer program or instructions. When the computer program or the instructions are run on a computer, the computer is caused to perform the method according to any one of the possible implementations of the first aspect to the sixth aspect.

### BRIEF DESCRIPTION OF DRAWINGS

FIG. 1 is a diagram of an architecture of a 5th generation mobile communication system 5GS according to an embodiment of this application;
FIG. 2A and FIG. 2B are a schematic flowchart for model training logical function MTLF-based machine learning ML model accuracy monitoring according to an embodiment of this application;
FIG. 3 is a schematic flowchart of a machine learning ML model for analytics subscription or unsubscription according to an embodiment of this application;
FIG. 4 is a diagram of an architecture of a communication system according to an embodiment of this application;
FIG. 5 is a schematic flowchart 1 of a communication method according to an embodiment of this application;
FIG. 6 is a schematic flowchart 2 of a communication method according to an embodiment of this application;
FIG. 7 is a schematic flowchart 3 of a communication method according to an embodiment of this application;
FIG. 8 is a schematic flowchart 4 of a communication method according to an embodiment of this application;
FIG. 9 is a schematic flowchart 5 of a communication method according to an embodiment of this application;
FIG. 10 is a schematic flowchart 6 of a communication method according to an embodiment of this application;
FIG. 11 is a schematic flowchart 7 of a communication method according to an embodiment of this application;
FIG. 12 is a diagram 1 of a structure of a communication apparatus according to an embodiment of this application; and
FIG. 13 is a diagram 2 of a structure of a communication apparatus according to an embodiment of this application.

### DESCRIPTION OF EMBODIMENTS

For ease of understanding, the following first describes technical terms in embodiments of this application.
1. 5th generation mobile communication system (5G system (5G system, 5GS) for short):

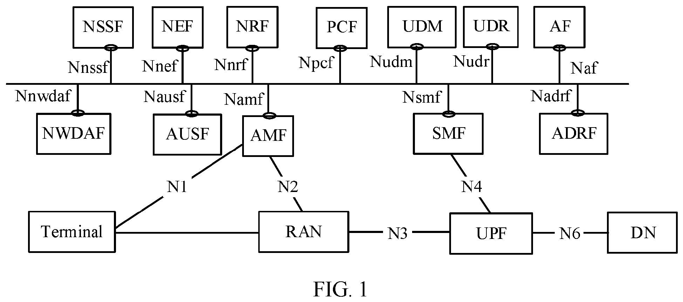

   FIG. 1 is a diagram of an architecture of a 5GS. As shown in FIG. 1, the 5GS includes an access network (access network, AN) and a core network (core network, CN), and may further include a terminal device.

The terminal device may be a terminal device having receiving and sending functions, or may be a chip or a chip system that may be disposed in the terminal device. The terminal device may also be referred to as a user equipment (user equipment, UE), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (pad), a wireless data card, a personal digital assistant (personal digital assistant, PDA) computer, a wireless modem (modem), a handheld device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) having a terminal function, or the like. The terminal device in this application may alternatively be a vehicle-mounted module, a vehicle-mounted assembly, a vehicle-mounted part, a vehicle-mounted chip, or a vehicle-mounted unit that is built in a vehicle as one or more parts or units.

The foregoing AN is configured to implement an access-related function, may provide a network access function for an authorized user in a specific area, and can determine transmission links with different quality based on a user level, a service requirement, and the like, to perform transmission of user data. The AN forwards a control signal and the user data between the terminal and the CN. The AN may include an access network device, which may also be referred to as a radio access network (radio access network, RAN) device. The CN is mainly responsible for maintaining subscription data of a mobile network, and provides functions such as session management, mobility management, policy management, and security authentication for the terminal device. The CN mainly includes the following: a user plane function (user plane function, UPF), an authentication server function (authentication server function, AUSF), an access and mobility management function (access and mobility management function, AMF), a session management function (session management function, SMF), a network slice selection function (network slice selection function, NSSF), a network exposure function (network exposure function, NEF), a network repository function (network repository function, NRF), a policy control function (policy control function, PCF), a unified data management (unified data management, UDM), a unified data repository (unified data repository, UDR), an application function (application function, AF), a network data analytics function (network data analytics function, NWDAF), and an analytics data repository function (analytics data repository function, ADRF).

As shown in FIG. 1, the UE accesses a 5G network via the RAN device. The UE communicates with the AMF through an N1 interface (N1 for short). The RAN communicates with the AMF through an N2 interface (N2 for short). The RAN communicates with the UPF through an N3 interface (N3 for short). The SMF communicates with the UPF through an N4 interface (N4 for short). The UPF accesses a data network (data network, DN) through an N6 interface (N6 for short). In addition, control plane functions such as the AUSF, the AMF, the SMF, the NSSF, the NEF, the NRF, the PCF, the UDM, the UDR, the AF, the NWDAF, and the ADRF shown in FIG. 1 interact with each other through service-based interfaces. For example, a service-based interface exhibited by the AUSF includes Nausf, a service-based interface exhibited by the AMF includes Namf, a service-based interface exhibited by the SMF includes Nsmf, a service-based interface exhibited by the NSSF includes Nnssf, a service-based interface exhibited by the NEF includes Nnef, a service-based interface exhibited by the NRF includes Nnrf, a service-based interface exhibited by the PCF includes Npcf, a service-based interface exhibited by the UDM includes Nudm, a service-based interface exhibited by the UDR includes Nudr, a service-based interface exhibited by the AF includes Naf, a service-based interface exhibited by the NWDAF includes Nnwdaf, and a service-based interface exhibited by the ADRF includes Nadrf.

The RAN device may be a device that provides access for the terminal device. For example, the RAN device may include an access network device in a next generation mobile communication system like 6G, for example, a 6G base station. Alternatively, in the next generation mobile communication system, the network device may alternatively be named in another manner, which falls within the protection scope of embodiments of this application. This is not limited in this application. Alternatively, the RAN device may further include a gNB in 5G, for example, a new radio (new radio, NR) system, or one or a group (including a plurality of antenna panels) of antenna panels of a base station in 5G, or may be a network node that forms a gNB, a transmission point (transmission reception point, TRP, or transmission point, TP), or a transmission measurement function (transmission measurement function, TMF), for example, a baseband unit (building base band unit, BBU), a central unit (centralized unit, CU) or a distributed unit (distributed unit, DU), an RSU having a base station function, a wired access gateway, or a 5G core network. Alternatively, the RAN device may further include an access point (access point, AP), a wireless relay node, a wireless backhaul node, macro base stations in various forms, a micro base station (also referred to as a small cell), a relay station, an access point, a wearable device, a vehicle-mounted device, and the like in a wireless fidelity (wireless fidelity, Wi-Fi) system.

The UPF is mainly responsible for user data handling (forwarding, receiving, charging, and the like).

The AUSF is mainly configured to perform security authentication on the terminal device.

The AMF is mainly configured for mobility management in the mobile network, for example, user location update, registration of a user with a network, and user handover.

The SMF is mainly configured for session management in the mobile network, for example, session establishment, modification, and release. Specific functions are, for example, allocation of an internet protocol (internet protocol, IP) address to the user, and selection of a UPF that provides a data packet forwarding function.

The PCF mainly supports a unified policy framework to govern network behaviors, provides policy rules for a control layer network function, and is responsible for accessing subscription information relevant for policy decisions. The PCF may provide the AMF and the SMF with policies, for example, a quality of service (quality of service, QoS) policy and a slice selection policy.

The NSSF is mainly configured to select a network slice for the terminal device.

The NEF is mainly configured to support exposure of capabilities and events. For example, the NEF may expose some capabilities of the 5G network to a third-party application through an application programming interface (application program interface, API), and the third-party application obtains some capabilities of the 5G network by invoking, via the AF, the API provided by the NEF, so that the third-party application can control some behaviors of the 5G network and the terminal device.

The UDM is mainly configured to store user data, for example, subscription data and authentication/authorization data.

The UDR is mainly configured to store structured data. Stored content includes subscription data, policy data, structured data for exposure, and application-related data.

The AF mainly supports interaction with the CN to provide services, for example, influence on data routing decision-making, a policy control function, or provision of some third-party services for a network side.

The NWDAF network element supports data collection from other network functions and the AF network element, supports data collection from an operations, administration, and maintenance (operations, administration, and maintenance, OAM) network element, and supports analytics data provisioning to the other network functions and the AF network element. In other words, the NWDAF network element has functions of data collection, model training, data analytics, and model inference. To be specific, the NWDAF network element may be configured to: collect related data from a network element, a third-party service server, the terminal device, or a network management system; perform data analytics based on the related data to obtain an analytics result; and provide the analytics result for the network element, the third-party service server, the terminal device, or the network management system. The analytics result may assist a network in selecting a quality of service parameter of a service, assist the network in performing traffic routing, assist the network in selecting a background data transfer policy, or the like. In addition, the NWDAF network element may be further configured to: collect the related data from the network element, the third-party service server, the terminal device, or the network management system, perform model training based on the related data to obtain an AI model or an ML model, and provide the AI model or the ML model for another NWDAF network element. The AI model or the ML model may be used to assist the NWDAF network element in generating the data analytics result based on the related data.

An NWDAF containing an analytics logical function (analytics logical function, AnLF) may be configured to: perform model inference, export analytics information, that is, export statistics and/or a prediction based on an analytics consumer request, and expose an analytics service. An NWDAF containing a model training logical function (model training logical function, MTLF) may be configured to: train an ML model, and expose a new training service, for example, provide a trained ML model.

The ADRF network element may provide services for storage and retrieval of data and analytics for a consumer. For example, the consumer sends, to the ADRF network element, a data management storage request (Nadrf Data Management Storage Request) that contains to-be-stored data or analytics. Alternatively, the consumer sends a data management storage subscription request (Nadrf Data Management Storage Subscription Request) to the ADRF network element, to request the ADRF network element to subscribe to and receive data or analytics to be stored. Then, the ADRF network element subscribes to the NWDAF network element or a data collection coordination function (data collection coordination function, DCCF) network element to obtain the data or the analytics, and provides a notification address of the ADRF network element or a notification correlation identity (identity, ID). The analytics or the data is then provided as a notification via a DCCF data management (Ndccf_DataManagement) service, an NWDAF data management (Nnwdaf_DataManagement) service, or an MFAF (messaging framework adaptor NF) data management (Nmfaf_3caDataManagement) service.

It may be understood that the functions mentioned in embodiments of this application may alternatively be represented as functional network elements or functional entities. For example, the UPF may be represented as a UPF network element, the AMF may be represented as an AMF network element, the SMF may be represented as an SMF network element, the PCF may be represented as a PCF network element, and the like. This is not limited.

2. Procedure for MTLF-based ML model accuracy monitoring:

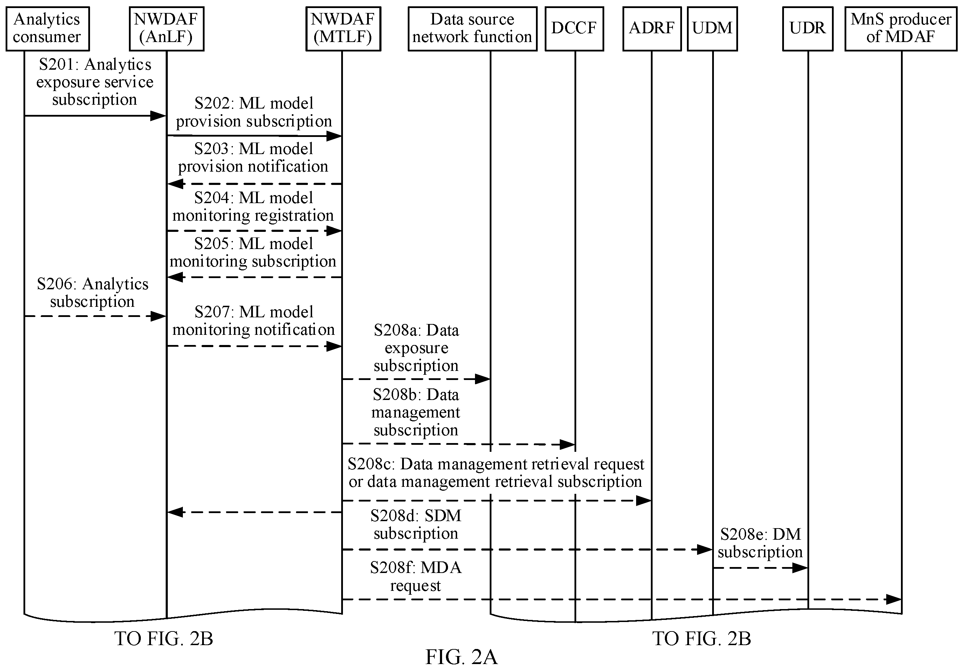

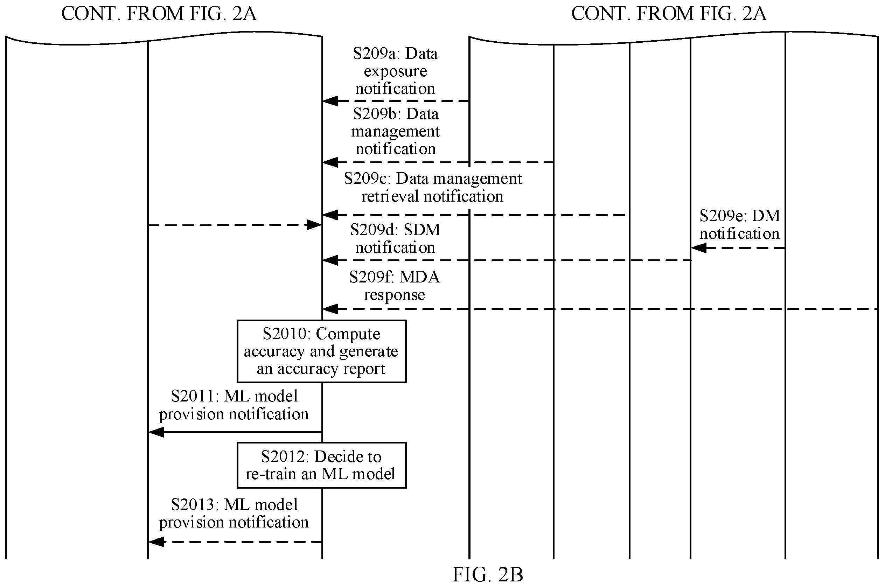

FIG. 2A and FIG. 2B illustrate a procedure for monitoring accuracy of a configured ML model by using newly collected data. An NWDAF containing an AnLF may provide inference data to an NWDAF containing MTLF for model accuracy monitoring, and the NWDAF containing MTLF determines re-training or re-provisioning of the ML model. The procedure for MTLF-based ML model accuracy monitoring is specifically described below.

S201: An analytics consumer (analytics consumer) initiates an analytics exposure service subscription (Nnwdaf_AnalyticsSubscription_subscribe) service operation towards the NWDAF containing AnLF.

S202: The NWDAF containing AnLF requests an ML model from the NWDAF containing MTLF, using an ML model provision subscription (Nnwdaf_MLModelProvisio_MLModelProvision_Subscribe) service operation.

The NWDAF containing AnLF may include an analytics accuracy threshold, which is used as an indicator to execute an accuracy monitoring operation. The NWDAF containing AnLF may include a data set tag (DataSetTag) and/or an ADRF ID, which are/is used to store inference data and obtain inference data from the ADRF. The inference data is related to the accuracy monitoring and re-training or re-provisioning of the ML model. The inference data may include input data, prediction data, and ground truth data at a time which a prediction refers to.

S203: The NWDAF containing MTLF provides a trained ML model to the NWDAF containing AnLF.

The NWDAF containing MTLF may include accuracy information. The accuracy information indicates accuracy of the ML model during training. The NWDAF containing MTLF may send the ML model to the NWDAF containing AnLF, using an ML model provision notification (Nnwdaf_MLModelProvision_Notify) service operation.

S204: The NWDAF containing AnLF registers use of the ML model with the NWDAF containing MTLF to indicate its capability of sending analytics feedback information and/or ML model accuracy information from the analytics consumer.

The NWDAF containing AnLF may register the use of the ML model with the NWDAF containing MTLF, using an ML model monitoring registration (Nnwdaf_MLModelMonitor_Register) service operation.

S205: Due to the registration in the previous step, the NWDAF containing MTLF may subscribe to the NWDAF containing AnLF to obtain the analytics feedback information and/or ML model accuracy information from the analytics consumer by invoking an ML model monitoring subscription (Nnwdaf_MLModelMonitor_Subscribe) service operation, if the service operation is supported by the NWDAF containing AnLF.

S206: The analytics consumer may send the analytics feedback information in an analytics subscription (Nnwdaf_AnalyticsSubscription_Subscribe) message as described in Clause 6.1.1.

S207: The NWDAF containing AnLF may send the analytics feedback information and/or ML model accuracy information received from the analytics consumer by invoking an ML model monitoring notification (Nnwdaf_MLModelMonitor_Notify) service operation as requested in S205. When the NWDAF containing MTLF receives the analytics feedback information or the ML model accuracy information, the NWDAF containing MTLF may trigger S208 to S2013 to enhance the ML model accuracy.

S208a to S208f: The NWDAF containing MTLF determines, based on requests from one or more NWDAFs containing AnLFs or a local policy thereof, whether to perform ML model accuracy monitoring and re-training/re-provisioning of the ML model by collecting new data from various data sources:
(1) The NWDAF containing MTLF may collect new data for ML model accuracy monitoring, re-training, and re-provisioning from the data sources NF and DCCF by invoking event exposure subscription (Nnf_EventExposure _Subscribe) and data management subscription (Ndccf_DataManagement_Subscribe) service operations respectively.
(2) When the ADRF ID and/or the DataSetTag are/is given by S202, the NWDAF containing MTLF may retrieve historical data from the ADRF indicated by the NWDAF containing AnLF in S202, by invoking a data management retrieval request (Nadrf_DataManagementRetrievalRequest) or data management retrieval subscription (Nadrf_DataManagementRetrieval_Subscribe) service operation. Otherwise, the NWDAF containing MTLF may retrieve the historical data from the DCCF or the NWDAF containing AnLF by invoking a DCCF data management subscription (Ndccf_DataManagement_Subscribe) service operation or an NWDAF data management subscription (Nnwdaf_DataManagement_Subscribe) service operation respectively.
(3) If the NWDAF containing AnLF does not include the DataSetTag with the ADRF ID in S202, the NWDAF containing MLTF may request the ADRF to subscribe for a collection of analytics and data that correspond to the analytics generated by the ML model provisioned in S203, using the procedures defined in Clause 6.2B.3.
(4) The NWDAF containing MTLF may subscribe to UDM to obtain a notification on a change in subscription data for a target of ML model reporting by invoking a UDM SDM subscription (Nudm_SDM_Subscribe) service operation, and the UDM subscribes to UDR to obtain a notification of a modification on UE subscription data by invoking a UDR DM subscription (Nudr_DM_Subscribe) service operation.
(5) The NWDAF containing MTLF may consider data quality in the accuracy monitoring by collecting fault prediction analytics data from an MDAS to determine a status of the data source NF, using a management data analytics (management data analytics, MDA) request.

If the NWDAF containing MTLF has already collected new test data and performed ML model accuracy monitoring and re-training which is triggered by another NWDAF containing an AnLF (for ML model accuracy monitoring and re-training), the NWDAF containing MTLF determines, based on its internal logic, whether to use data for subscription or not.

S209a to S209f: The NWDAF containing MTLF receives requested data from various sources as requested in S208a to S208f.

S2010: Based on the collected analytics and data from S209a to S209f, the NWDAF containing MTLF computes the accuracy using a prediction and actually measured data observed at the time which the prediction refers to. The NWDAF containing MTLF may discard data from a data source if detecting data quality of the data source is not good. The NWDAF containing MTLF may generate a prediction with the collected input data to compute the accuracy if only the input data and the ground truth data are available.

S2011: An accuracy report is sent to the NWDAF containing AnLF, for example, when a reporting threshold is met by invoking an NWDAF ML model provision notification (Nnwdaf_MLModelProvision_Notify) service operation.

S2012: Based on the computed accuracy, the NWDAF containing MTLF may decide to re-train (re-train) or re-provision (re-provision) the ML model.

S2013: When a newly generated or re-trained ML model is ready, the NWDAF containing MTLF sends the new or re-trained ML model to the NWDAF containing AnLF by invoking an NWDAF ML model provision notification (Nnwdaf_MLModelProvision_Notify) service operation. The NWDAF containing MTLF may send an accuracy report of the new or re-trained ML model to the NWDAF containing AnLF.

It may be understood that, for the procedure for MTLF-based ML model accuracy monitoring, refer to related content in the 3rd generation partnership project (3rd Generation Partnership Project, 3GPP) protocol TS 23.288 V18.2.0. Details are not described herein.

3. Procedure of an ML model for analytics subscription or unsubscription:

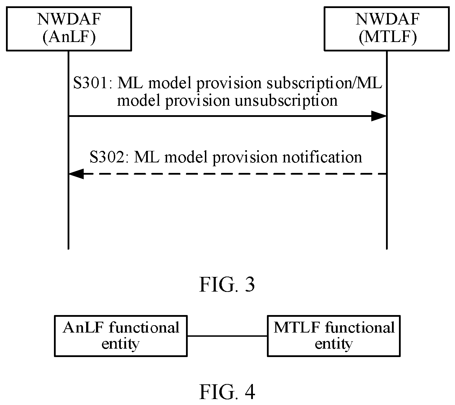

FIG. 3 shows a procedure of an ML model for analytics subscription or unsubscription according to an embodiment of this application. The procedure may be used by an NWDAF service consumer (namely, an NWDAF containing an AnLF) to subscribe or unsubscription at another NWDAF (namely, an NWDAF containing an MTLF). When ML model information on related to analytics is available, NWDAF service consumer is notified using an Nnwdaf_ MLModelProvision service defined in Clause 7.5. The ML model information is used by the NWDAF containing AnLF to derive the analytics. The service is also used by the NWDAF to modify existing ML model subscription. The NWDAF may be at the same time a consumer of this service provided by another NWDAF and a provider of this service to another NWDAF.

S301: The NWDAF service consumer (namely, the NWDAF containing AnLF) subscribes to, modifies, or cancels subscription for a trained ML model associated with an analytics ID or a set of trained ML models associated with a set of analytics IDs by invoking an ML model provision subscription (Nnwdaf_MLModelProvision_Subscribe)/ML model provision unsubscription (Nnwdaf_MLModelProvision_Unsubscribe) service operation. Parameters that can be provided by the NWDAF service consumer are listed in Clause 6.2A.2. The service consumer may optionally indicate its support for a plurality of ML models (if available). When the subscription for the trained ML model associated with the analytics ID is received, the NWDAF containing MTLF may: determine whether an existing trained ML model can be used for subscription, or determine whether triggering further training for the existing trained ML model is needed for the subscription.

If the NWDAF containing MTLF determines that further training is needed, the NWDAF may initiate data collection from an NF (for example, an AMF, a DCCF, or an ADRF), a UE application (via an AF), or an OAM (as described in Clause 6.2), to generate an ML model.

If service invocation is for a subscription modification or unsubscription, the NWDAF service consumer includes an identifier (subscription correlation ID) to be modified in invocation of Nnwdaf_MLModelProvision_Subscribe.

S302: If the NWDAF service consumer subscribes to the trained ML model associated with the analytics ID or the set of trained ML models associated with the set of analytics IDs, the NWDAF containing MTLF notifies the NWDAF service consumer with: a unique ML model identifier and ML model information that are associated with each analytics ID requested by the service consumer.

It should be noted that the structure and the format of the ML model identifier and its uniqueness are up to stage 3. Parameters defined for the plurality of ML models are for analytics accuracy enhancement.

An Nnwdaf_MLModelProvision_Notify service operation is invoked. The content of trained ML model information that can be provided by the NWDAF containing MTLF is specified in Clause 6.2A.2.

The NWDAF containing MTLF also invokes the Nnwdaf_ MLModelProvision_Notify service operation to notify an available re-trained ML model when the NWDAF containing MTLF determines that the previously provided trained ML model needs re-training in step S301.

When step S301 is for a subscription modification (that is, including the subscription correlation ID), the NWDAF containing MTLF may provide either a newly trained ML model different from the previously provided one, or a re-trained ML model by invoking the Nnwdaf_MLModelProvision_Notify service operation.

4. Information elements in an NWDAF model notification message:
An NWDAF containing an MTLF provides to a consumer of an ML model provisioning service operation as described in Clauses 7.5 and 7.6, the output information as listed below:
(only for Nnwdaf_ MLModelProvision_Notify) notification correlation information; and
a set of pairs of unique ML model identifiers and ML model information for each analytics ID requested by the service consumer.

The ML model information includes an ML model file address (for example, a URL or an FQDN) or the following optional information.
(1) ML model degradation indicator: indicates whether a provided ML model is degraded.
(2) Validity period: indicates a time period when the provided ML model information applies.
(3) Spatial validity: indicates an area where the provided ML model information applies.
(4) ML model representative ratio: indicates a percentage of UEs in a group whose data is used in the ML model training when a target of ML model reporting is a group of UEs.
(5) Training input data information: contains information about various settings that have been used by the MTLF during training, for example,

used "Input Data", each piece of input data optionally accompanied by metrics that show the data characteristics and granularity with which the data has been used (namely, a sampling ratio, a maximum quantity of input values and/or a maximum time interval between samples of the input data, a data range including maximum and minimum values, mean, standard deviation, and data distribution (if applicable)) and a time, namely, a timestamp and duration, when the data was obtained;
data sources related to the "input data" that were used for ML model training;
ADRF (set) ID, where when the ADRF (set) ID is provisioned, a storage transaction ID can also be provisioned, and
it may be understood that this can be a subset of possible input data specified for a specific analytics type; and
data sources that have been used as a list of NF instance (or NF set) identifiers.

It may be understood that the spatial validity and validity period are determined by MTLF internal logic and it is a subset of AoI if provided in ML model filter information and ML model target period, respectively.

It may be understood that the data source information enables ML model selection when different models are available for an analytics ID, or it enables a consumer to avoid selecting an ML model that used data from a specific data source at a particular time or used data characterized by specific data characteristics.

(6) ML model accuracy information: indicates accuracy of the ML model if an analytics accuracy threshold is requested, including accuracy information of the ML model.

(7) ML model metric (ML model accuracy).

It may be understood that, for the procedure for MTLF-based ML model accuracy monitoring, the procedure of the ML model for analytics subscription or unsubscription, and the information elements in the NWDAF model notification message, refer to related content in 3GPP TS 23.288 V18.2.0. Details are not described herein.

It can be learned from the foregoing descriptions that an ML model provision notification message may have a plurality of different functions. For example, in S203, the ML model provision notification message may be used to provide an ML model (denoted as a model #ml) for the AnLF functional entity. In this case, the AnLF functional entity may obtain the model #ml based on the ML model provision notification message. Alternatively, in S2011, the ML model provision notification message may be used to provide accuracy information of the model #ml. In this case, the AnLF functional entity may obtain the accuracy information of the model #ml based on the ML model provision notification message. Alternatively, in S2013, the ML model provision notification message may be used to provide a model obtained by updating the model #ml. In this case, the AnLF functional entity may obtain, based on the ML model provision notification message, the model obtained by updating the model #ml.

However, in a conventional technology, after receiving an ML model provision notification message, an AnLF functional entity immediately obtains a model corresponding to a model identifier carried in the ML model provision notification message, to ensure real-time performance of the model. However, it can be learned from the foregoing that when the ML model provision notification message is used to provide accuracy information of the model, the AnLF functional entity updates the accuracy information of the model, but obtains the same model. Therefore, how to improve flexibility and effectiveness of obtaining the ML model by the AnLF functional entity is a hot topic in current discussion.

For the foregoing technical problem, embodiments of this application provide the following technical solutions, to improve the flexibility and effectiveness of obtaining the ML model by the AnLF functional entity.

The following describes the technical solutions of this application with reference to accompanying drawings.

The technical solutions in embodiments of this application may be applied to various communication systems, such as a wireless network (Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system like a long term evolution (long term evolution, LTE) system, a worldwide interoperability for microwave access (worldwide interoperability for microwave access, WiMAX) communication system, a 5th generation (5th generation, 5G) communication system, for example, a new radio (new radio, NR) system, and a future communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may alternatively be used.

In addition, in embodiments of this application, the terms like "example" or "for example" are for representing giving an example, an illustration, or a description. Any embodiment or design solution described as an "example" in this application should not be explained as being more preferred or having more advantages than another embodiment or design solution. Exactly, the term "example" is used to present a concept in a specific manner.

In embodiments of this application, "information (information)", "signal (signal)", "message (message)", "channel (channel)", and "signaling (signaling)" may be interchangeably used sometimes. It should be noted that meanings expressed by the terms are matchable when differences of the terms are not emphasized. The terms "of (of)", "corresponding, relevant (corresponding, relevant)", and "corresponding (corresponding)" may sometimes be interchangeably used. It should be noted that meanings expressed by the terms are matchable when differences of the terms are not emphasized. In addition, "/" mentioned in this application may indicate an "or" relationship.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

For ease of understanding of embodiments of this application, a communication system shown in FIG. 4 is first used as an example to describe in detail a communication system applicable to embodiments of this application. For example, FIG. 4 is a diagram of an architecture of a communication system to which a communication method according to an embodiment of this application is applicable.

As shown in FIG. 4, the communication system is applicable to the foregoing 5GS, and includes an AnLF functional entity and an MTLF functional entity. The AnLF functional entity is carried on an NWDAF network element, and/or the MTLF functional entity is carried on an NWDAF network element.

The AnLF functional entity may use a model and provide services externally. In other words, the AnLF functional entity may provide input data for the model, obtain corresponding output data by using the model, and provide the output data for a third party. The MTLF functional entity may provide a model. In addition, the MTLF functional entity may produce or train a model, or obtain a model from another place.

It may be understood that the AnLF functional entity and the MTLF functional entity may be disposed on a same NWDAF network element, that is, one NWDAF network element includes the AnLF functional entity and the MTLF functional entity; or may be separately disposed on different NWDAF network elements, that is, the different NWDAF network elements include the AnLF functional entity and the MTLF functional entity respectively. This is not limited in embodiments of this application.

It may be further understood that the "AnLF functional entity" and the "MTLF functional entity" in embodiments of this application are merely examples for description. The "AnLF functional entity" may alternatively be replaced with any possible description, for example, an "NWDAF containing an AnLF" or a "model consumer". The "MTLF functional entity" may alternatively be replaced with any possible description, for example, an "NWDAF containing an MTLF" or a "model provider". This is not limited in embodiments of this application. In addition, the "AnLF functional entity" and the "MTLF functional entity" may alternatively be replaced with another network element or network function that has a same function or includes a function of the AnLF functional entity or the MTLF functional entity. This is not limited in embodiments of this application.

In the communication system, the AnLF functional entity may determine, based on whether a first notification message carries first indication information, whether to obtain a first model, that is, whether to perform an operation for obtaining the first model (for example, send a request message for obtaining the first model). The first indication information indicates that the first model is updated, or the MTLF functional entity provides the first model. That is, when the first notification message carries the first indication information, the AnLF functional entity needs to obtain the first model; or when the first notification message does not carry the first indication information, the AnLF functional entity does not need to obtain the first model. Therefore, when the first notification message carries the first indication information, the AnLF functional entity obtains the first model; or when the first notification message does not carry the first indication information, the AnLF functional entity does not obtain the first model. In this way, the AnLF functional entity can obtain the first model only when the AnLF functional entity needs to obtain the first model, to improve flexibility and effectiveness of obtaining the first model by the AnLF functional entity.

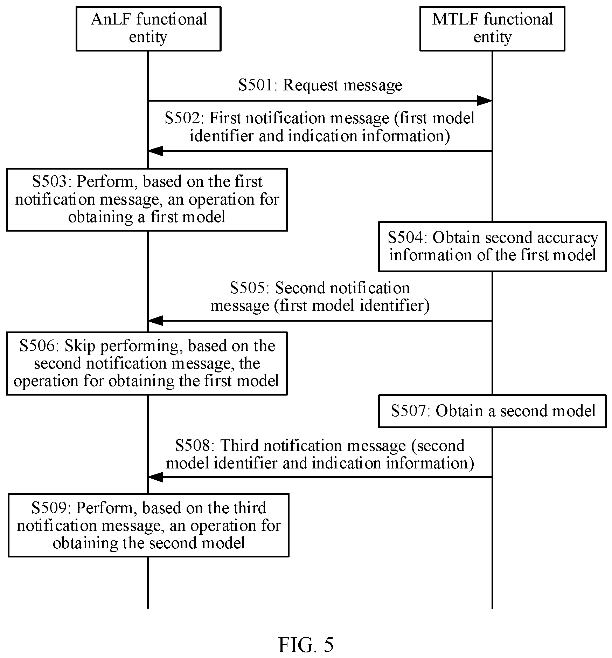

For ease of understanding, the following specifically describes a procedure for interaction between the AnLF functional entity and the MTLF functional entity by using method embodiments with reference to FIG. 5, FIG. 6, and FIG. 8. Details are described below.

### Scenario 1:

For example, FIG. 5 is a schematic flowchart 1 of a communication method according to an embodiment of this application. The communication method is applicable to communication between an AnLF functional entity and an MTLF functional entity in a scenario like ML model accuracy monitoring in a 5G architecture. As shown in FIG. 5, a procedure of the communication method is as follows.

S501: The AnLF functional entity sends a request message (denoted as a request message #1) to the MTLF functional entity. Correspondingly, the MTLF functional entity receives the request message from the AnLF functional entity.

The request message #1 is used to request an ML model. The request message #1 may be sent by invoking an ML model provision subscription (MLModelProvision_Subscribe) service operation or another operation. This is not limited in this embodiment of this application.

S502: The MTLF functional entity sends a first notification message to the AnLF functional entity. Correspondingly, the AnLF functional entity receives the first notification message from the MTLF functional entity.

The first notification message is used to provide a model, and the model may be a new model (described below). The first notification message may be sent by invoking an ML model provision notification (Nnwdaf_MLModelMonitor_Notify) service operation. The first notification message carries a first model identifier and indication information.

The first model identifier indicates a first model. The first model identifier may be at least one of the following: an identity (identity, ID) of the first model, a uniform resource locator (uniform resource locator, URL) of the first model, or a fully qualified domain name (fully qualified domain name, FQDN) of the first model. The first model is an ML model, and the first model is a new model. The first model may be obtained through training by the MTLF functional entity, or may be obtained in another manner. This is not limited.

The new model may be a model provided by the MTLF functional entity for the AnLF functional entity for the first time after the MTLF functional entity receives the request message sent by the AnLF functional entity, that is, the AnLF functional entity has never received the model before. For example, after receiving the request message, the MTLF functional entity provides a model #1a for the AnLF functional entity, and the model #1a is a new model.

The indication information may indicate that the MTLF functional entity provides a model, and the model may be a new model or an updated model. Alternatively, the indication information may indicate that a new model or an updated model is provided, and the model may be the new model or the updated model. Alternatively, the indication information may indicate that a model corresponding to a model identifier is provided, and the model corresponding to the model identifier may be a new model or an updated model.

The updated model may be a model provided by the MTLF functional entity for the AnLF functional entity not for the first time after the MTLF functional entity receives the request message sent by the AnLF functional entity. It may be understood that the updated model may be a model obtained by re-training an existing model by the MTLF functional entity, that is, the updated model is the model generated based on the existing model; or the updated model may be a model re-trained by the MTLF functional entity. The existing model may be understood as a model locally stored by the MTLF functional entity, or a model that has been sent by the MTLF functional entity to the AnLF functional entity.

For example, after receiving the request message, the MTLF functional entity provides the model #1a for the AnLF functional entity, and the model #1a is a new model. The MTLF functional entity obtains a model #1b by updating the model #1a, and provides the model #1b for the AnLF functional entity. The model #1b is an updated model, that is, the model #1b may be a model generated by the MTLF functional entity based on the model #1a, or the model #1b may be a model re-trained by the MTLF functional entity.

It may be understood that the notification message carrying the indication information may indicate that the model corresponding to the model identifier carried in the notification message is provided, that is, the AnLF functional entity has not obtained the model, that is, the AnLF functional entity needs to obtain the model. For example, a notification message #c carries an identifier #1c of a model and indication information, and the identifier #1c of the model indicates a model #1c. In this case, after receiving the notification message #c, the AnLF functional entity needs to obtain the model #1c.

After receiving the request message, the MTLF functional entity may provide the first model by sending the first notification message to the AnLF functional entity.

Optionally, the first notification message further carries first accuracy information of the first model. The first accuracy information indicates accuracy of the first model. The first accuracy information may be obtained through computation based on data (for example, model test data) related to usage of the first model. Accuracy information of a model may be computed by reusing a manner in the conventional technology. This is not limited in this embodiment of this application.

S503: The AnLF functional entity performs, based on the first notification message, an operation for obtaining the first model.

After receiving the first notification message, the AnLF functional entity may obtain the first model based on the first notification message carrying the indication information, that is, perform the operation for obtaining the first model.

In a possible implementation, the operation for obtaining the first model may be sending a request message for obtaining the first model.

The request message for obtaining the first model may be implemented by invoking an ML model management retrieval (Nadrf_MLModelManagement_Retrieval) service operation. That the AnLF functional entity sends the request message for obtaining the first model may represent that the AnLF functional entity is obtaining the first model.

It may be understood that the AnLF functional entity may send, to an ADRF functional entity, the request message for obtaining the first model. After receiving the request message, the ADRF functional entity returns a first model address (for example, the URL or the FQDN of the first model) to the AnLF functional entity. The AnLF functional entity may obtain the first ML model based on the first model address (for example, the URL or the FQDN), for example, obtain the first model based on a hypertext transfer protocol (hypertext transfer protocol, HTTP) technology.

In another possible implementation, the operation for obtaining the first model may be obtaining the first model at a first preset location. The first preset location may be the URL or the FQDN of the first model, or may be another address. This is not limited.

It may be understood that, in this case, the AnLF functional entity has obtained the first preset location, for example, the first preset location is preset in the AnLF functional entity. In addition, the first model is placed at the first preset location in advance. For example, before the AnLF functional entity receives the first notification message, the first model is placed at the first preset location, so that the AnLF functional entity can directly obtain the first model at the first preset location.

S504: The MTLF functional entity obtains second accuracy information of the first model.

The second accuracy information indicates accuracy of the first model, and may be the same as or different from the first accuracy information. The second accuracy information is accuracy information of the first model that is determined based on data generated when the AnLF functional entity uses the first model. In other words, the second accuracy information is latest accuracy information of the first model.

It may be understood that, after obtaining the first model, the AnLF functional entity may use the first model. The MTLF functional entity may obtain an accuracy report of the first model based on data generated during the usage of the first model, that is, obtain the second accuracy information of the first model. The MTLF functional entity may obtain the second accuracy information by reusing a manner in the conventional technology. This is not limited in this embodiment of this application.

S505: The MTLF functional entity sends a second notification message to the AnLF functional entity. Correspondingly, the AnLF functional entity receives the second notification message from the MTLF functional entity.

The second notification message indicates the second accuracy information of the first model. The second notification message and the first notification message are notification messages of a same type, and information elements (information elements, IEs) in the second notification message and the first notification message are the same. That is, the second notification message may also be sent by invoking the ML model provision notification (Nnwdaf_MLModelMonitor_Notify) service operation. The second notification message carries the first model identifier, and does not carry the indication information. That the second notification message does not carry the indication information may represent that the MTLF functional entity does not provide a model, for example, a new model or an updated model. In this case, after receiving the second notification message, the AnLF functional entity does not need to repeatedly obtain the first model, that is, does not need to perform the operation for obtaining the first model.

After obtaining the second accuracy information of the first model, the MTLF functional entity may send the second notification message to enable the AnLF functional entity to obtain the latest accuracy information of the first model, namely, the second accuracy information.

Optionally, the second notification message carries the second accuracy information. In this case, after receiving the second notification message, the AnLF functional entity may obtain the second accuracy information, and does not need to obtain the second accuracy information from another place, to reduce overheads of the AnLF functional entity.

It may be understood that, when the second notification message carries the second accuracy information, the MTLF functional entity may obtain the second accuracy information via the second notification message; or when the second notification message does not carry the second accuracy information, the MTLF functional entity may obtain the second accuracy information at a second preset location.

S506: The AnLF functional entity skips performing, based on the second notification message, the operation for obtaining the first model.

The skipping performing the operation for obtaining the first model may indicate not obtaining the first model, and may be specifically not sending the request message for obtaining the first model, or not obtaining the first model at a first predetermined location. For the request message for obtaining the first model and obtaining the first model at the first predetermined location, refer to related descriptions of S503. Details are not described herein again.

After receiving the second notification message, the AnLF functional entity may not obtain the first model based on the second notification message not carrying the indication information. That is, the AnLF functional entity obtains only the second accuracy information. In addition, when the second notification message carries the second accuracy information, the AnLF functional entity obtains the second accuracy information by receiving the second notification message; or when the second notification message does not carry the second accuracy information, the AnLF functional entity may obtain the second accuracy information from another place.

S507: The MTLF functional entity obtains a second model.

The second model is a model obtained by updating the first model, that is, the second model is an updated model. The second model may be a model re-trained based on the first model, or the second model may be a newly generated model. This is not limited.

It may be understood that the MTLF functional entity may obtain the second model when a value corresponding to the second accuracy information is less than an accuracy threshold. The MTLF functional entity may obtain the second model by reusing a manner in the conventional technology. This is not limited in this embodiment of this application. In this way, the MTLF functional entity may provide the AnLF functional entity with a model with higher accuracy or a model that better meets an actual situation.

S508: The MTLF functional entity sends a third notification message to the AnLF functional entity. Correspondingly, the AnLF functional entity receives the third notification message from the MTLF functional entity.

The third notification message is used to provide the updated model, namely, the second model. The third notification message, the first notification message, and the second notification message are notification messages of a same type, and information elements (information elements, IEs) in the third notification message, the first notification message, and the second notification message are the same. That is, the third notification message may also be sent by invoking the ML model provision notification (Nnwdaf_MLModelMonitor_Notify) service operation. The third notification message carries a second model identifier and indication information.

The second model identifier indicates the second model. The second model identifier may be at least one of the following: an identity (identity, ID) of the second model, a uniform resource locator (uniform resource locator, URL) of the second model, or a fully qualified domain name (fully qualified domain name, FQDN) of the second model.

It may be understood that the second model identifier may be the same as or different from the first model identifier. When the second model identifier is the same as the first model identifier, a same model identifier indicates different models. In this case, the second model may be referred to as a first model, that is, the first model may be changed. Correspondingly, when the second model identifier is different from the first model identifier, different model identifiers indicate different models. Whether the second model identifier is the same as the first model identifier may be correspondingly selected based on an actual situation. This is not limited in this embodiment of this application.

It may be further understood that when a model identifier is an ID of a model, that the second model identifier may be the same as the first model identifier may be understood as that the MTLF functional entity sets a same ID for different models, and that the second model identifier may be different from the first model identifier may be understood as that the MTLF functional entity sets different IDs for different models. When a model identifier is a URL or an FQDN of a model, that the second model identifier may be the same as the first model identifier may be understood as that the MTLF functional entity stores different models at a same location, that is, when the model is updated, the MTLF functional entity replaces the model before the update with an updated model; and that the second model identifier may be different from the first model identifier may be understood as that the MTLF functional entity stores different models at different locations.

For the indication information, refer to related descriptions of S502. Details are not described herein again.

After obtaining the second model, the MTLF functional entity may provide the second model by sending the third notification message to the AnLF functional entity.

Optionally, the third notification message further carries third accuracy information of the second model. The third accuracy information indicates accuracy of the second model. The third accuracy information may be obtained through computation based on data related to usage of the second model. The accuracy information of the model may be computed by reusing a manner in the conventional technology. This is not limited in this embodiment of this application.

S509: The AnLF functional entity performs, based on the third notification message, an operation for obtaining the second model.

A principle of the operation for obtaining the second model is similar to that of the operation for obtaining the first model in S503. For details, refer to related descriptions of S503. Details are not described herein again.

That the AnLF functional entity performs the operation for obtaining the second model may represent that the AnLF functional entity obtains the second model. In other words, after receiving the third notification message, the AnLF functional entity may obtain, based on the indication information carried in the third notification message, the second model corresponding to the second model identifier carried in the third notification message.

It may be understood that, it can be learned from S501 to S509 that, that the indication information indicates that the MTLF functional entity provides the model may be understood as follows: When receiving the request message #1 sent by the AnLF functional entity, the MTLF functional entity provides the new model for the AnLF functional entity; or when obtaining the updated model (for example, the second model in S507), the MTLF functional entity provides the updated model for the AnLF functional entity. That the indication information indicates that the MTLF functional entity provides the model may alternatively be understood as follows: When providing the model for the AnLF functional entity for the first time, the MTLF functional entity provides the new model for the AnLF functional entity; or when providing the model for the AnLF functional entity not for the first time, the MTLF functional entity provides the updated model for the AnLF functional entity.

It can be learned from the technical solution described in the scenario 1 that, when the MTLF functional entity provides the model (for example, the new model or the updated model) for the AnLF functional entity via the notification message (for example, the first notification message or the third notification message), the indication information may be carried in the notification message, so that after receiving the notification message, the AnLF functional entity may obtain, based on the indication information carried in the notification message, the model corresponding to the model identifier carried in the notification message. Correspondingly, when the MTLF functional entity provides the accuracy information of the model for the AnLF functional entity via the notification message (for example, the second notification message), the indication information is not carried in the notification message, so that after receiving the notification message, the AnLF functional entity may not obtain, based on the notification message not carrying the indication information, the model corresponding to the model identifier carried in the notification message. That is, the AnLF functional entity obtains only the accuracy information of the model. In other words, the indication information may be carried or not carried in the notification message, so that the AnLF functional entity obtains or does not obtain the model after receiving the notification message. In this way, the AnLF functional entity may determine, based on whether the notification message carries the indication information, whether to obtain the model, and does not need to obtain the model each time after receiving the notification message. In this way, flexibility and effectiveness of obtaining the model by the AnLF functional entity can be improved, and overheads of the AnLF functional entity can be reduced.

### Scenario 2:

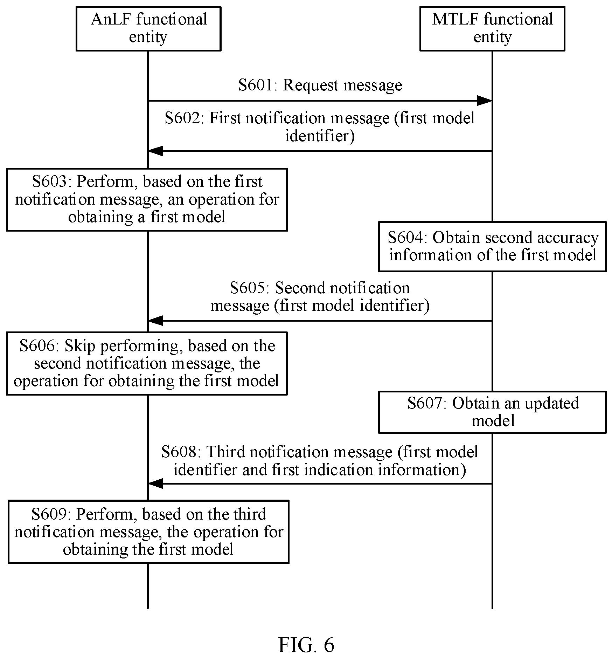

For example, FIG. 6 is a schematic flowchart 2 of a communication method according to an embodiment of this application. The communication method is applicable to communication between an AnLF functional entity and an MTLF functional entity in a scenario like ML model accuracy monitoring in a 5G architecture. As shown in FIG. 6, a procedure of the communication method is as follows.

S601: The AnLF functional entity sends a request message to the MTLF functional entity. Correspondingly, the MTLF functional entity receives the request message from the AnLF functional entity.

For a specific implementation principle of S601, refer to related descriptions of S501. Details are not described again.

S602: The MTLF functional entity sends a first notification message to the AnLF functional entity. Correspondingly, the AnLF functional entity receives the first notification message from the MTLF functional entity.

The first notification message indicates that the MTLF functional entity provides an ML model. The first notification message carries a first model identifier, and does not carry first indication information. For other content of the first notification message, refer to related descriptions of S502. Details are not described herein again.

The first model identifier indicates a first model. For the first model identifier and the first model, refer to related descriptions of S502. Details are not described herein again.

The first indication information may indicate that a model corresponding to a model identifier is updated. Alternatively, the first indication information may indicate that the MTLF functional entity provides an updated model. It may be understood that, that the notification message carries the first indication information may indicate that the model corresponding to the model identifier carried in the notification message is updated, or the MTLF functional entity provides the updated model; or that the notification message does not carry the first indication information may indicate that the model corresponding to the model identifier carried in the notification message is not updated, or the MTLF functional entity does not provide the updated model. For the updated model, refer to related descriptions of S502. Details are not described herein again.

For example, a notification message #2a carries an identifier #2a of a model and first indication information, and the identifier #2a of the model indicates a model #2a. In this case, the first indication information may indicate that the model #2a corresponding to the identifier #2a of the model is updated, or the MTLF functional entity provides an updated model, namely, the model #2a.

It may be understood that, in the scenario 2, models (for example, a new model and an updated model) may use a same model identifier. For example, the new model is a model #2b, a model identifier corresponding to the model #2b is a first model identifier, and the first model identifier indicates the first model, that is, in this case, the first model is the model #2b. The updated model is a model #2c, and a model identifier corresponding to the model #2c is also the first model identifier, that is, the first model is the model #2c after the first model is updated. It can be learned that in this embodiment of this application, there is only one model and one model identifier, namely, the first model and the first model identifier. The first model may be changed. For example, the first model is a new model in step S602, and for another example, the first model is an updated model in S608 (described below). It may be further understood that the updated model is used to replace the previous model, that is, the AnLF functional entity no longer uses the model before the update, and replaces the model before the update with the updated model.

In a possible implementation, the first indication information may indicate a model update notification message. In other words, when a notification message carries the first indication information, it may indicate that a message type of the notification message is a model update notification message. Correspondingly, when the notification message does not carry the first indication information, it may indicate that the notification message is not the model update notification message. The model update notification message may represent that a model corresponding to a model identifier carried in a model notification message is updated, or the MTLF functional entity provides an updated model. It may be understood that when the notification message is the model update notification message, a functional entity receiving the notification message needs to obtain the model corresponding to the model identifier carried in the notification message, and the model is an updated model.

For example, a notification message #2d carries an identifier #2d of a model and the first indication information, and the identifier #2d of the model indicates a model #2d. In this case, the notification message #2d is a model update notification message, that is, the model #2d is an updated model. After receiving the notification message #2d, the AnLF functional entity may determine, based on the notification message #2d carrying the first indication information, that the notification message #2d is the model update notification message, to obtain the model #2d.

After receiving the request message, the MTLF functional entity may provide the first model by sending the first notification message to the AnLF functional entity.

Optionally, the first notification message further carries second indication information. The second indication information indicates a model delivery notification message. In other words, when a notification message carries the second indication information, it may indicate that the notification message is a model delivery notification message. Correspondingly, when the notification message does not carry the second indication information, it may indicate that the notification message is not the model delivery notification message. The model delivery notification message may indicate that the MTLF functional entity provides a new model. It may be understood that when the message type of the notification message is the model delivery notification message, a functional entity receiving the notification message needs to obtain the model corresponding to the model identifier carried in the notification message.

For example, a notification message #2e carries an identifier #2e of a model and the second indication information, and the identifier #2e of the model indicates a model #2e. In this case, the notification message #2e is a model delivery notification message, that is, the model #2e is a new model. After receiving the notification message #2e, the AnLF functional entity may determine, based on the notification message #2e carrying the second indication information, that the notification message #2e is the model delivery notification message, to obtain the model #2e.

Optionally, the first notification message further carries first accuracy information of the first model. For details, refer to related descriptions of S502. Details are not described herein again.

S603: The AnLF functional entity performs, based on the first notification message, an operation for obtaining the first model.

For the operation for obtaining the first model, refer to related descriptions of S503. Details are not described herein again.

After the AnLF functional entity receives the first notification message, if the first notification message does not carry the first indication information and the second indication information, the AnLF functional entity may obtain the first model when determining that the first model identifier is received for the first time. That is, in this case, the AnLF functional entity does not have the first model, and the AnLF functional entity needs to obtain the first model. If the first notification message carries the second indication information, the AnLF functional entity may determine, based on the second indication information, that the first notification message is the model delivery notification message, and obtains the first model based on the first model identifier and the first notification message being the model delivery notification message.

S604: The MTLF functional entity obtains second accuracy information of the first model.

For a specific implementation principle of S604, refer to related descriptions of S504. Details are not described again.

S605: The MTLF functional entity sends a second notification message to the AnLF functional entity. Correspondingly, the AnLF functional entity receives the second notification message from the MTLF functional entity.

The second notification message indicates the second accuracy information of the first model. The second notification message carries the first model identifier, and does not carry the first indication information. For other content of the second notification message, refer to related descriptions of S505. Details are not described herein again.

Optionally, the second notification message further carries third indication information.

The third indication information may indicate that the MTLF functional entity provides the accuracy information of the model. It may be understood that, that the third indication information is carried in a notification message may indicate that the MTLF functional entity provides accuracy information of a model corresponding to a model identifier carried in the notification message. For example, that the third indication information is carried in the second notification message may indicate that the MTLF functional entity provides the accuracy information of the first model.

In a possible implementation, the third indication information may indicate that a message type is a model accuracy notification message. In other words, when a notification message carries the third indication information, it may indicate that a message type of the notification message is a model accuracy notification message. Correspondingly, when the notification message does not carry the third indication information, it may indicate that the message type of the notification message is not the model accuracy notification message. The model accuracy notification message may be used to provide accuracy information of a model. It may be understood that when the notification message is the model accuracy notification message, a functional entity receiving the notification message obtains only the model accuracy information, and does not need to obtain the model.

For example, a notification message #2f carries an identifier #2f of a model and the third indication information, and the identifier #2f of the model indicates a model #2f. In this case, the notification message #2f is a model accuracy notification message. After receiving the notification message #2f, the AnLF functional entity may determine, based on the notification message #2f carrying the third indication information, that the notification message #2f is the model accuracy notification message, to obtain only accuracy information of the model #2e, that is, not obtain the model #2e.

Optionally, the second notification message carries the second accuracy information. For details, refer to related descriptions of S505. Details are not described herein again.

S606: The AnLF functional entity skips performing, based on the second notification message, the operation for obtaining the first model.

For the skipping performing the operation for obtaining the first model, refer to related descriptions of S506. Details are not described herein again.

After the AnLF functional entity receives the second notification message, if the second notification message does not carry the first indication information or the third indication information, the AnLF functional entity may obtain only the accuracy information of the first model when determining that the first model identifier is received not for the first time, that is, skip performing the operation for obtaining the first model. If the second notification message carries the third indication information, the AnLF functional entity may determine, based on the third indication information carried in the second notification message, that the second notification message is used to provide the accuracy information of the model, or determine that the message type of the second notification message is the model accuracy notification message, and obtain only the accuracy information of the first model based on the first model identifier and the message type of the second notification message being the model accuracy notification message, that is, skip performing the operation for obtaining the first model. That is, in this case, the AnLF functional entity obtains only the second accuracy information.

S607: The MTLF functional entity obtains an updated model.

The updated model is a model obtained by updating the first model in S602. The updated model may be a model re-trained based on the first model, or the updated model may be a newly generated model. This is not limited. It may be understood that, in this embodiment of this application, each model is the first model. Therefore, the updated model is the first model.

It may be understood that the updated model may be the second model in S605. For a specific implementation principle of S607, refer to related descriptions of S507. Details are not described again.

S608: The MTLF functional entity sends a third notification message to the AnLF functional entity. Correspondingly, the AnLF functional entity receives the third notification message from the MTLF functional entity.

The third notification message is used to provide the updated model. The third notification message carries the first model identifier and the first indication information. For other content of the third message and the first model identifier, refer to related descriptions of S508. Details are not described herein again. It may be understood that, that the third notification message carries the first indication information indicates that the third notification message is a model update notification message. In other words, after receiving the third notification message, the AnLF functional entity needs to obtain the updated model, namely, the first model.

Optionally, the second notification message further carries third accuracy information of the first model. For details, refer to related descriptions of S508. Details are not described herein again.

After obtaining the first model, the MTLF functional entity may provide the updated model by sending the third notification message to the AnLF functional entity.

S609: The AnLF functional entity performs, based on the third notification message, the operation for obtaining the first model.

For the performing the operation for obtaining the first model, refer to related descriptions of S503. Details are not described herein again.

After receiving the first notification message, the AnLF functional entity may determine, based on the first indication information carried in the third notification message, that the message type of the third notification message is the model update notification message, to perform the operation for obtaining the first model, that is, obtain the updated model.

It may be understood that the first indication information, the second indication information, and the third indication information may be same information. To be specific, the first indication information, the second indication information, and the third indication information have a same IE, and different bits corresponding to the IE represent different indication information. For example, 00 represents the first indication information, 01 represents the second indication information, and 10 represents the third indication information. The first indication information, the second indication information, and the third indication information may alternatively be different information, that is, different information represents the indication information. This is not limited.

It can be learned from the technical solution described in the scenario 2 that, when the MTLF functional entity provides the updated model for the AnLF functional entity, the MTLF functional entity may include the first indication information in the notification message used to provide the updated model, that is, the first indication information indicates that the notification message is a notification message used to provide the updated model, so that after receiving the notification message, the AnLF functional entity may determine, based on the first indication information carried in the notification message, that the notification message provides the updated model, and obtain the model. Correspondingly, when the MTLF functional entity provides the accuracy information of the model for the AnLF functional entity, the first indication information may not be carried in the notification message used to provide the accuracy information of the model, that is, the first indication information is not carried to indicate that the notification message does not provide the updated model. In this case, the notification message provides the accuracy information of the model, so that after receiving the notification message, the AnLF functional entity may determine, based on the notification message not carrying the first indication information, that the notification message is the model accuracy notification message, to obtain only the model accuracy information, that is, not obtain the model. In this way, the AnLF functional entity can be prevented from obtaining the model when the notification message is the model accuracy notification message, so that communication overheads of the AnLF functional entity can be reduced, and accuracy of obtaining the model can be improved.

In addition, for related technical effects of the technical solution in the scenario 2, refer to related technical effects of the technical solution in the scenario 1. Details are not described again.

It may be understood that the scenario 1 and the scenario 2 are merely examples, and some steps in the scenario 1 and the scenario 2 may be replaced or combined. For example, S502 and S503 may be replaced with S602 and S603, and S508 and S509 may be replaced with S608 and S609. This is not limited. It may be further understood that, when steps in the scenario 1 and the scenario 2 are replaced or combined, indication information (denoted as indication information #a) indicating that the first model is updated and indication information (denoted as indication information #b) indicating that the MTLF functional entity provides the model may be same information, that is, the two pieces of indication information have a same IE, and different bits corresponding to the IE represent different indication information. For example, 0 represents the indication information #a, and 1 represents the indication information #b. The indication information #a and the indication information #b may alternatively be different information, that is, different information represents the indication information. This is not limited.

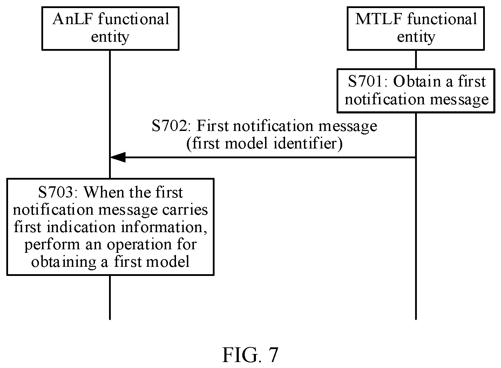

The foregoing describes, with reference to the scenario 1 and the scenario 2, a specific procedure of the communication method provided in embodiments of this application in each scenario. With reference to FIG. 7, the following describes an overall procedure of the communication method provided in embodiments of this application in the scenario 1 and the scenario 2.

For example, FIG. 7 is a schematic flowchart 3 of a communication method according to an embodiment of this application. The communication method is applicable to communication between an MTLF functional entity and an AnLF functional entity in the foregoing communication system.

As shown in FIG. 7, a procedure of the communication method is as follows.

S701: The MTLF functional entity obtains a first notification message.

The first notification message may have a plurality of different functions. For example, the first notification message may be used to provide a model, for example, a new model or an updated model, or the first notification message may be used to provide accuracy information of the model. In other words, the first notification message may be the first notification message (denoted as a message #1), the second notification message (denoted as a message #2), or the third notification message in the foregoing scenario 1 or scenario 2. For the new model and the updated model, refer to related descriptions of S502. Details are not described herein again.

The first notification message may carry a model identifier. The model identifier indicates a first model, and the model identifier may be at least one of the following: an ID of the first model, a URL of the first model, or an FQDN of the first model. This is not limited. For the model identifier and the first model, refer to related descriptions of the first model identifier and the first model or the second model identifier and the second model in the foregoing scenario 1 or scenario 2. Details are not described herein again.

Optionally, the first notification message may further carry first indication information.

In a first possible implementation, the first indication information may indicate that the MTLF functional entity provides the first model, or the first model is provided. For details, refer to related descriptions of the indication information (S502) in the foregoing scenario 1. Details are not described herein again.

In a second possible implementation, the first indication information may indicate that the first model is updated. For details, refer to related descriptions of the first indication information (S602) in the foregoing scenario 2. Details are not described herein again.

Specifically, that the first indication information indicates that the first model is updated may include: The first indication information indicates that a message type of the first notification message is a model update notification message. For details, refer to related descriptions of S602. Details are not described herein again.

It may be understood that, when the first notification message is notification messages with different functions, the first model corresponds to different models, and in this case, the first notification message carries the first indication information or does not carry the first indication information. The following provides descriptions in different cases.

Case 7.1: The first notification message is used to provide the new model.

In this case, the first model is a new model. For example, when the first notification message is the message #1, the first model is a model provided by the MTLF functional entity for the AnLF functional entity after the MTLF functional entity receives a request message from the AnLF functional entity. In this case, the first notification message may carry the first indication information, and the first indication information indicates that the MTLF functional entity provides the first model.

It may be understood that for case 7.1, refer to related descriptions of S502 in the scenario 1 or S602 in the scenario 2. Details are not described herein again.

Case 7.2: The first notification message is used to provide the accuracy information of the model.

In this case, the first model is a model that has been obtained by the AnLF functional entity. For example, when the first notification message is the message #2, the AnLF functional entity has obtained the first model, that is, the first model already exists. In other words, in this case, the AnLF functional entity stores the first model and/or the first model identifier. In this case, the first notification message does not carry the first indication information.

It may be understood that if the communication method provided in this embodiment of this application is applicable to the scenario 1 or the scenario 2, the first notification message in the case 7.2 is the second notification message in the scenario 1 or the scenario 2. For details, refer to related descriptions of S505 or S605. Details are not described herein again.

Case 7.3: The first notification message is used to provide the updated model.

In this case, the first model is an updated model. In other words, the first model is updated. For example, the AnLF functional entity has obtained the second model, that is, the second model already exists. In other words, the AnLF functional entity stores the second model and/or the second model identifier. The first model may be a model obtained by updating the second model. In this case, the first notification message carries the first indication information, and the first indication information indicates that the MTLF functional entity provides the first model, or the first indication information indicates that the first model is updated.

It may be understood that, the first model may be the model obtained by updating the second model, the model identifier of the first model is the same as the model identifier of the second model, and the first model is a model re-trained based on the second model, or the first model is a newly generated model. It may be understood that, that the model identifier of the first model is the same as the model identifier of the second model means that the model before the update and the updated model use a same model identifier, that is, each model corresponds to one model identifier, that is, each model is the first model. In other words, in this case, the first model is changeable. For details, refer to related descriptions of S602. Details are not described herein again.

In addition, if the communication method provided in this embodiment of this application is applicable to the scenario 1 or the scenario 2, the first notification message in the case 7.3 is the third notification message in the scenario 1 or the scenario 2. For details, refer to related descriptions of S508 or S608. Details are not described herein again.

It can be learned that when the first model is updated, the first notification message may carry the first indication information, and the first indication information indicates that the first model is updated. Correspondingly, when the first model is not updated, the first notification message may not carry the first indication information.

Alternatively, when the MTLF functional entity provides the first model, the first notification message may carry the first indication information, and the first indication information indicates that the MTLF functional entity provides the first model. Correspondingly, when the MTLF functional entity does not provide the first model, the second notification message may not carry the first indication information.

It may be understood that, when the MTLF functional entity needs the AnLF functional entity to obtain the first model, or the AnLF functional entity needs to obtain the first model, the first notification message may carry the first indication information, and the first indication information indicates the AnLF functional entity to obtain the first model. Correspondingly, when the MTLF functional entity does not need the AnLF functional entity to obtain the first model, or the AnLF functional entity does not need to obtain the first model, the first notification message may not carry the first indication information.

S702: The MTLF functional entity sends the first notification message to the AnLF functional entity. Correspondingly, the AnLF functional entity receives the first notification message from the MTLF functional entity.

For a specific implementation principle of S702, refer to related descriptions in the scenario 1 or the scenario 2. Details are not described again.

S703: The AnLF functional entity performs an operation for obtaining the first model when the first notification message further carries the first indication information.

The operation for obtaining the first model may be sending a request message for obtaining the first model, or may be obtaining the first model at a preset location. A specific principle is similar to that of the foregoing operation for obtaining the first model. For understanding, refer to related descriptions of S503. Details are not described herein again.

In a possible implementation, that the AnLF functional entity performs the operation for obtaining the first model when the first notification message further carries the first indication information may specifically include: The AnLF functional entity determines, based on the first indication information, that the message type of the first notification message is the model update notification message. The AnLF functional entity performs, based on the model identifier and the message type of the first notification message being the model update notification message, the operation for obtaining the first model. In other words, the AnLF functional entity determines the message type of the first notification message based on the first indication information, and obtains the first model by determining that the message type of the first notification message is the model update notification message. If the communication method provided in embodiments of this application is applied to the scenario 2, the first notification message is the third notification message in the scenario 2. For a specific implementation principle of an operation of obtaining the first model by the AnLF functional entity based on the first indication information, refer to related descriptions of S609 in the scenario 2. Details are not described again.

In a possible implementation, the AnLF functional entity skips performing the operation for obtaining the first model when the first notification message does not carry the first indication information. That the first notification message does not carry the first indication information may indicate that the first model is not updated, or the first model has been provided for the AnLF functional entity. In this case, the AnLF functional entity does not need to repeatedly obtain the first model. That is, in this case, the AnLF functional entity obtains only the accuracy information of the first model. In this way, the AnLF functional entity can be prevented from repeatedly obtaining the first model, to reduce overheads of the AnLF functional entity. It may be understood that, when the first notification message does not carry the first indication information, the first notification message may be the second notification message in the scenario 1 or the scenario 2. For details, refer to related descriptions of the scenario 1 and the scenario 2. Details are not described herein again.

Optionally, that the AnLF functional entity skips performing the operation for obtaining the first model when the first notification message does not carry the first indication information may specifically include: The AnLF functional entity skips performing the operation for obtaining the first model when the first notification message does not carry the first indication information or indication information (denoted as fourth indication information) indicating that a message type is a model delivery notification message.

When the first indication information indicates that the first model is updated, that the first notification message does not carry the first indication information may indicate that the first notification message does not provide an updated model, and that the first notification message does not carry the fourth indication information may indicate that the first notification message is not the model delivery notification message, that is, the first notification message does not provide a new model. For the fourth indication information, refer to the second indication information in the scenario 2. Details are not described herein again. In other words, in this case, the first indication information does not provide a new model or an updated model. Therefore, in this case, the AnLF functional entity does not obtain the first model, that is, skips performing the operation for obtaining the first model. In this way, the AnLF functional entity can be prevented from repeatedly obtaining the first model, to reduce overheads of the AnLF functional entity.

It may be understood that, it can be learned from the foregoing content that, in this embodiment of this application, that the first indication information indicates that the MTLF functional entity provides the model may be understood as follows: When receiving the request message (for example, the request message #1 in the scenario 1) that is sent by the AnLF functional entity and that is used to obtain the model, the MTLF functional entity provides the new model for the AnLF functional entity; or when obtaining the updated model, the MTLF functional entity provides the updated model for the AnLF functional entity. That the first indication information indicates that the MTLF functional entity provides the model may alternatively be understood as follows: When providing the model for the AnLF functional entity for the first time, the MTLF functional entity provides the new model for the AnLF functional entity; or when providing the model for the AnLF functional entity not for the first time, the MTLF functional entity provides the updated model for the AnLF functional entity. For details, refer to related descriptions of the scenario 1. Details are not described herein again.

In conclusion, in this embodiment of this application, the AnLF functional entity may determine, based on whether the received first notification message carries the first indication information, whether to obtain the first model. To be specific, if the first notification message carries the first indication information, the AnLF functional entity obtains the first model; or if the first notification message does not carry the first indication information, the AnLF functional entity does not obtain the first model. In this way, the AnLF functional entity can obtain the first model only when the AnLF functional entity needs to obtain the first model, to improve flexibility and effectiveness of obtaining the model by the AnLF functional entity.

Optionally, with reference to the foregoing embodiment, the foregoing communication method may further include: The MTLF functional entity sends a second notification message to the AnLF functional entity. Correspondingly, the AnLF functional entity receives the second notification message from the MTLF functional entity. The second notification message carries the model identifier and second indication information, and the second indication information indicates that a message type of the second notification message is a model delivery notification message. In other words, the second indication information may be carried in the second notification message used to provide a new model, to indicate that the second notification message is used to provide the new model. In this way, after receiving the second notification message, the AnLF functional entity may obtain the model based on the second indication information carried in the second notification message.

Further, after the AnLF functional entity receives the second notification message from the MTLF functional entity, the communication method may further include: The AnLF functional entity determines, based on the second indication information, that the message type of the second notification message is the model delivery notification message. The AnLF functional entity performs, based on the model identifier and the message type of the second notification message being the model delivery notification message, the operation for obtaining the first model. If the communication method provided in this embodiment of this application is applicable to the scenario 2, the second notification message is the first notification message in the scenario 2. For details, refer to related descriptions of the scenario 1 and the scenario 2. Details are not described herein again.

Optionally, with reference to the foregoing embodiment, the communication method may further include: The MTLF functional entity sends a third notification message to the AnLF functional entity. Correspondingly, the AnLF functional entity receives the third notification message from the MTLF functional entity. The AnLF functional entity skips performing, based on third indication information, the operation for obtaining the first model. The third notification message carries the model identifier and the third indication information, and the third indication information indicates that a message type of the third notification message is a model accuracy notification message. The third notification message may be the second notification message in the scenario 2. For details, refer to related descriptions of the scenario 2. Details are not described herein again. It may be understood that, after receiving the third notification message, the AnLF functional entity obtains only the accuracy information of the first model.

### Scenario 3:

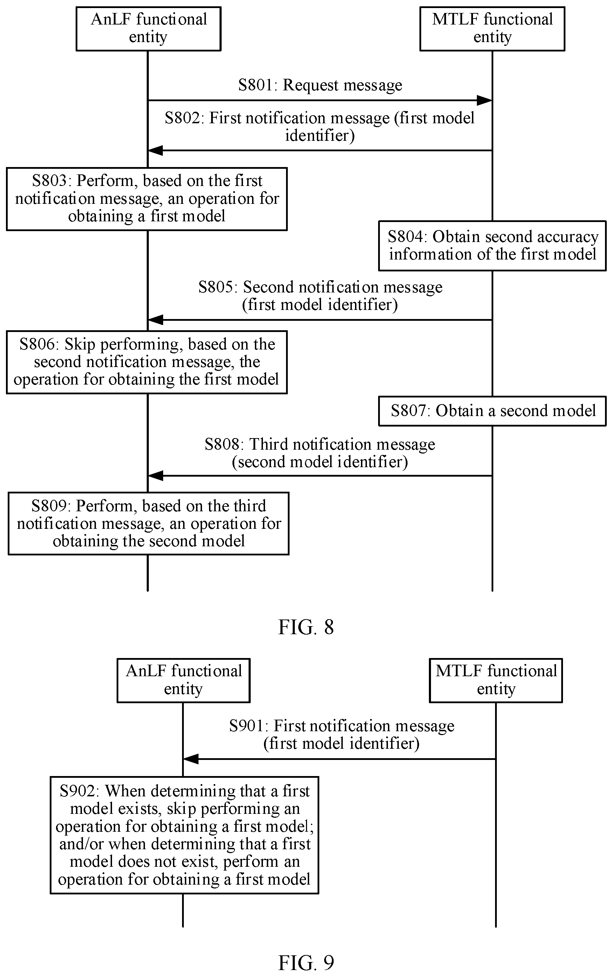

For example, FIG. 8 is a schematic flowchart 4 of a communication method according to an embodiment of this application. The communication method is applicable to communication between an AnLF functional entity and an MTLF functional entity in a scenario like ML model accuracy monitoring in a 5G architecture. As shown in FIG. 8, a procedure of the communication method is as follows.

S801: The AnLF functional entity sends a request message to the MTLF functional entity. Correspondingly, the MTLF functional entity receives the request message from the AnLF functional entity.

For a specific implementation principle of S801, refer to related descriptions of S501. Details are not described again.

S802: The MTLF functional entity sends a first notification message to the AnLF functional entity. Correspondingly, the AnLF functional entity receives the first notification message from the MTLF functional entity.

The first notification message is used to provide an ML model. The first notification message carries a first model identifier, and the first model identifier indicates a first model. For other content of the first model identifier and the first model, refer to related descriptions of S502. Details are not described herein again.

After receiving the request message, the MTLF functional entity may provide the first model by sending the first notification message to the AnLF functional entity.

Optionally, the first notification message further carries first accuracy information of the first model. For details, refer to related descriptions of S502. Details are not described herein again.

S803: The AnLF functional entity performs, based on the first notification message, an operation for obtaining the first model.

For the operation for obtaining the first model, refer to related descriptions of S503. Details are not described herein again.

After receiving the first notification message, the AnLF functional entity may determine, based on the first model identifier carried in the first notification message, whether the first model exists, that is, whether the AnLF functional entity stores the first model or the first model identifier. When determining that the first model or the first model identifier does not exist, the AnLF functional entity performs the operation for obtaining the first model, that is, obtain the first model.

S804: The MTLF functional entity obtains second accuracy information of the first model.

For a specific implementation principle of S804, refer to related descriptions of S504. Details are not described again.

S805: The MTLF functional entity sends a second notification message to the AnLF functional entity. Correspondingly, the AnLF functional entity receives the second notification message from the MTLF functional entity.

The second notification message indicates the second accuracy information of the first model, and the second notification message carries the first model identifier. For other content of the second notification message, refer to related descriptions of S505. Details are not described herein again.

After obtaining the second accuracy information of the first model, the MTLF functional entity may send the second notification message to enable the AnLF functional entity to obtain latest accuracy information of the first model.

Optionally, the second notification message carries the second accuracy information. For details, refer to related descriptions of S505. Details are not described herein again.

S806: The AnLF functional entity skips performing, based on the second notification message, the operation for obtaining the first model.

For the skipping performing the operation for obtaining the first model, refer to related descriptions of S506. Details are not described herein again.

After receiving the second notification message, the AnLF functional entity may determine, based on the first model identifier carried in the second notification message, that the first model exists. In this case, the AnLF functional entity does not need to obtain the first model, that is, the AnLF functional entity needs to obtain only the second accuracy information of the first model. In this case, the AnLF functional entity does not send the request message for obtaining the first model, that is, does not obtain the first model.

It may be understood that, the AnLF functional entity may determine, by determining whether the AnLF functional entity stores the first model or the first model identifier, whether the first model exists. In other words, if the AnLF functional entity stores the first model or the first model identifier, the first model exists; or if the AnLF functional entity does not store the first model or the first model identifier, the first model does not exist.

S807: The MTLF functional entity obtains a second model.

For a specific implementation principle of S807, refer to related descriptions of S507. Details are not described again.

It may be understood that, when a model identifier includes a URL of a model, after obtaining the second model, the MTLF functional entity may send, to an ADRF functional entity, a request for requesting to configure a URL for the second model. Correspondingly, the ADRF functional entity receives the request for requesting to configure the URL for the second model from the MTLF functional entity, and the ADRF functional entity configures the URL for the second model based on the request for requesting to configure the URL for the second model. The URL of the second model is different from a URL of the first model, and the second model is a model obtained by updating the first model. In other words, the ADRF functional entity may configure different URLs for different models, so that after receiving a notification message, the AnLF functional entity may determine, based on a URL of a model carried in the notification message, whether the model exists, that is, whether to obtain the model.

S808: The MTLF functional entity sends a third notification message to the AnLF functional entity. Correspondingly, the AnLF functional entity receives the third notification message from the MTLF functional entity.

The third notification message is used to provide the model obtained by updating the first model, that is, provide the second model. The third notification message carries a second model identifier, and the second model identifier is different from the first model identifier. For the third notification message and the second model identifier, refer to related descriptions of S508. Details are not described herein again.

Optionally, the second notification message further carries third accuracy information of the second model. For details, refer to related descriptions of S508. Details are not described herein again.

After obtaining the second model, the MTLF functional entity may provide the second model by sending the third notification message to the AnLF functional entity.

S809: The AnLF functional entity performs, based on the third notification message, an operation for obtaining the second model.

A principle of the operation for obtaining the second model is similar to that of the second in S503. For details, refer to related descriptions of S503. Details are not described herein again.

After receiving the third notification message, the AnLF functional entity may determine, based on the second model identifier carried in the third notification message, that the second model does not exist. In this case, the AnLF functional entity needs to obtain the second model, that is, the AnLF functional entity performs the operation for obtaining the second model, to obtain the second model.

It may be understood that a principle of a manner in which the AnLF functional entity determines whether the second model exists is the same as that of a manner in which the AnLF functional entity determines whether the first model exists. For a same part, reference may be made to each other, and details are not described herein again. In addition, when the second notification message further carries third accuracy information, the AnLF functional entity may further obtain the third accuracy information.

It can be learned from the technical solution described in the scenario 3 that, the AnLF functional entity may determine, based on a model identifier carried in a notification message, whether to obtain a model. To be specific, the AnLF functional entity may determine, based on the model identifier carried in the notification message, whether the model corresponding to the model identifier exists. When the model exists, the AnLF functional entity skips performing an operation for obtaining the model, that is, does not obtain the model. When the model does not exist, the AnLF functional entity performs the operation for obtaining the model, that is, obtains the model. In this way, the AnLF functional entity can be prevented from obtaining the model after receiving the notification message, so that communication overheads of the AnLF functional entity can be reduced, and flexibility and effectiveness of obtaining the model can be improved.

In addition, for related technical effects of the technical solution in the scenario 3, refer to related technical effects of the technical solution in the scenario 1. Details are not described again.

The foregoing describes a specific procedure of the communication method provided in embodiments of this application in the scenario 3. With reference to FIG. 9 to FIG. 11, the following describes an overall procedure of the communication method provided in embodiments of this application in the scenario 3.

For example, FIG. 9 is a schematic flowchart 5 of a communication method according to an embodiment of this application. The communication method is applicable to communication between an MTLF functional entity and an AnLF functional entity in the foregoing communication system.

As shown in FIG. 9, a procedure of the communication method is as follows.

S901: The MTLF functional entity sends a first notification message to the AnLF functional entity. Correspondingly, the AnLF functional entity receives the first notification message from the MTLF functional entity.

The first notification message has a plurality of different functions. For example, the first notification message may be used to provide a model, for example, a new model or an updated model, or the first notification message may be used to provide accuracy information of the model. In other words, the first notification message may be the first notification message (denoted as a message #1), the second notification message (denoted as a message #2), or the third notification message (denoted as a message #3) in the foregoing scenario 3. For the new model and the updated model, refer to related descriptions of S502. Details are not described herein again.

The first notification message carries a first model identifier. The first model identifier indicates a first model, and the first model identifier may be at least one of the following: an ID of the first model, a URL of the first model, or an FQDN of the first model. This is not limited. For the first model identifier and the first model, refer to related descriptions of the first model identifier and the first model or the second model identifier and the second model in the scenario 3. Details are not described herein again. It may be understood that when the first notification message is notification messages with different functions, the first model is different models. The following provides descriptions in different cases.

Case 9.1: The first notification message is used to provide the new model.

In this case, the first model is a new model. For example, when the first notification message is the message #1, the first model is a first model provided by the MTLF functional entity for the AnLF functional entity.

Case 9.2: The first notification message is used to provide the accuracy information of the model.

In this case, the first model is a model that has been obtained by the AnLF functional entity. For example, when the first notification message is the message #2, the AnLF functional entity has obtained the first model, that is, the first model already exists. The AnLF functional entity stores the first model and/or the first model identifier.

Case 9.3: The first notification message is used to provide the updated model.

In this case, the first model is an updated model. For example, the AnLF functional entity has obtained a second model, that is, the second model already exists. The AnLF functional entity stores the second model and/or a second model identifier. The first model is a model obtained by updating the second model.

For example, when the first notification message is the message #3, the first model is a model obtained by updating the second model. It may be understood that the second model may be a new model, or may be an updated model. This is not limited.

Optionally, before the AnLF functional entity receives the first notification message from the MTLF functional entity, the communication method may further include: The MTLF functional entity sends a second notification message to the AnLF functional entity. Correspondingly, the AnLF functional entity receives the second notification message from the MTLF functional entity. When determining that the first model does not exist, the AnLF functional entity performs an operation for obtaining the first model. The AnLF functional entity stores the first model and/or the first model identifier.

The second notification message carries the first model identifier. It may be understood that the second notification message may be used to provide a new model or an updated model, that is, the second notification message may be the message #1 or the message #3. For example, when the second notification message is used to provide the new model, the first model is the new model; or when the second notification message is used to provide the updated model, the first model is the updated model. In this case, the first notification message may be used to provide accuracy information of the first model, that is, the first notification message may be the message #2, that is, may correspond to the case 2.

The determining that the first model does not exist may represent that the AnLF functional entity has never obtained the first model, that is, the AnLF functional entity does not store the first model and/or the first model identifier. That is, in this case, the AnLF functional entity needs to obtain the first model. It may be understood that, in this case, the first model may be the new model, or may be the updated model.

For the performing the operation for obtaining the first model, refer to related descriptions of S503. Details are not described herein again.

For example, after the AnLF functional entity sends a request message to the MTLF functional entity, the AnLF functional entity receives the second notification message from the MTLF functional entity. The second notification message carries an identifier of a model #1, that is, the second notification message is used to provide a new model. After receiving the second notification message, if determining that the model #1 does not exist, the AnLF functional entity sends a request for obtaining the model #1, to obtain the model #1. After the AnLF functional entity obtains the model #1, the AnLF functional entity may store the model #1 and/or the identifier of the model #1, to subsequently search for a model.

For another example, before the AnLF functional entity receives the second notification message from the MTLF functional entity, the AnLF functional entity has obtained the model #2. The second notification message carries the identifier of the model #1, that is, the second notification message is used to provide an updated model. In other words, the model #1 is a model obtained by updating the model #2. After receiving the second notification message, if determining that the model #1 does not exist, the AnLF functional entity may send the request for obtaining the model #1, to obtain the model #1, so as to subsequently search for a model.

After receiving the second notification message from the MTLF functional entity, the AnLF functional entity may determine whether the first model corresponding to the first model identifier carried in the second notification message exists. When the AnLF functional entity determines that the first model does not exist, the AnLF functional entity may obtain the first model, and store the first model and/or the first model identifier after obtaining the first model.

It may be understood that the determining that the first model does not exist may specifically include: The AnLF functional entity determines, based on the first model and/or the first model identifier, that the first model does not exist.

The AnLF functional entity stores a model and/or a model identifier after obtaining the model. When determining whether a model (for example, a model #A) exists, the AnLF function may search for the model #A and/or an identifier of the model #A. If the model #A and/or the identifier of the model #A are/is not stored, it may be determined that the model #A does not exist. In other words, the AnLF functional entity may determine whether the first model exists. When the AnLF functional entity determines that the first model does not exist, the AnLF functional entity sends the request message for obtaining the first model.

S902: When determining that the first model exists, the AnLF functional entity skips performing the operation for obtaining the first model; and/or when determining that the first model does not exist, the AnLF functional entity performs the operation for obtaining the first model.

The determining that the first model exists may represent that the AnLF functional entity has obtained the first model, that is, the AnLF functional entity stores the first model and/or the first model identifier. In this case, the AnLF functional entity does not need to repeatedly obtain the first model, that is, the AnLF functional entity needs to obtain only the first accuracy information of the first model. That is, the MTLF functional entity has sent the notification message that provides the first model. It may be understood that, in this case, the first notification message is used to provide the accuracy information of the model, that is, corresponds to the case 2.

For the operation for obtaining the first model, refer to related descriptions of S503. Details are not described herein again.

When determining that the first model exists, the AnLF functional entity skips performing the operation for obtaining the first model, that is, does not obtain the first model, that is, obtains only the first accuracy information of the first model. In this way, the AnLF functional entity may not obtain the first model when the AnLF functional entity does not need the first model, to reduce communication overheads of the AnLF functional entity.

Optionally, the determining that the first model exists may specifically include: The AnLF functional entity determines, based on the stored first model or first model identifier, that the first model exists. It may be understood that the AnLF functional entity stores a model and/or a model identifier after obtaining the model. Therefore, when determining, based on the first model or the first model identifier, that the first model or the first model identifier is stored, the AnLF functional entity may determine that the AnLF functional entity has obtained the first model.

For the determining that the first model does not exist, refer to related descriptions of S901. Details are not described herein again.

When determining that the first model does not exist, the AnLF functional entity may perform the operation for obtaining the first model, that is, obtain the first model. In this way, the AnLF functional entity can obtain the first model only when the AnLF functional entity needs to obtain the first model, to improve flexibility of obtaining the model.

In conclusion, in this embodiment of this application, after receiving the first notification message, the AnLF functional entity may determine, based on whether the first model exists, whether the AnLF functional entity obtains the first model. For example, when the AnLF functional entity determines that the first model exists, the first notification message is used to provide the accuracy information of the first model. In this case, the AnLF functional entity does not need to obtain the first model, that is, in this case, the AnLF functional entity skips performing the operation for obtaining the first model. Correspondingly, when the AnLF functional entity determines that the first model does not exist, the first notification message is used to provide the new model or the updated model. In this case, the AnLF functional entity needs to obtain the new model, that is, in this case, the AnLF functional entity performs the operation for obtaining the first model. It can be learned that, when receiving the first notification message, the AnLF functional entity may obtain or not obtain the first model based on different situations. That is, the AnLF functional entity can obtain the first model only when the AnLF functional entity needs to obtain the first model. In this way, flexibility and effectiveness of obtaining the model by the AnLF functional entity can be improved.

Optionally, with reference to the foregoing embodiment, the first notification message further carries the first accuracy information of the first model. For the first accuracy information, refer to related descriptions of S502. Details are not described herein again.

Further, when it is determined that the first model does not exist, the foregoing communication method may further include: The AnLF functional entity obtains the first accuracy information. In other words, in this case, the AnLF functional entity may not only obtain the first model, but also obtain the accuracy information of the first model, namely, the first accuracy information.

Further, when it is determined that the first model does not exist, the communication method may further include: The AnLF functional entity determines that the first notification message is a message indicating the accuracy information of the first model. That is, the first notification message may be used to provide the accuracy information of the first model.

Further, that the AnLF functional entity determines that the first notification message is the message indicating the accuracy information of the first model may specifically include: The AnLF functional entity obtains only the first accuracy information. In other words, in this case, the AnLF functional entity does not obtain the first model, that is, skips performing the operation for obtaining the first model. In this way, the first model can be prevented from being repeatedly obtained, to reduce overheads of the AnLF functional entity.

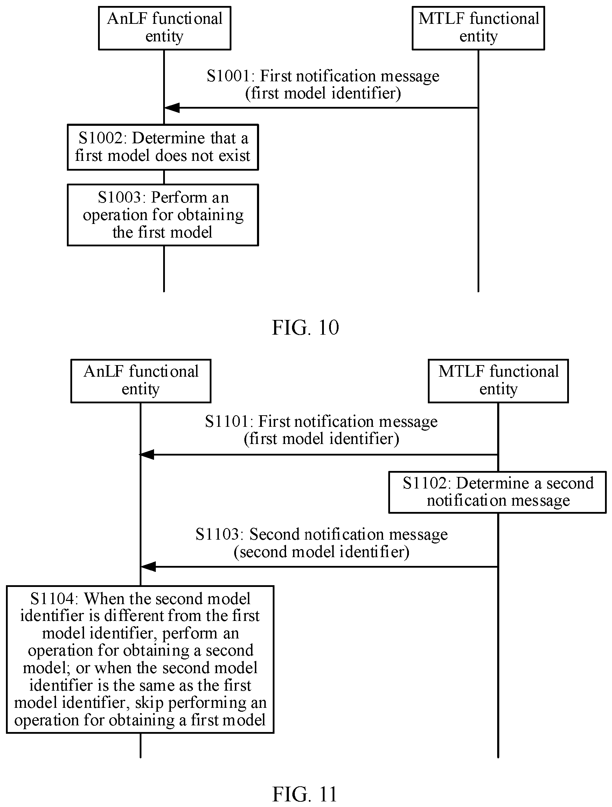

For example, FIG. 10 is a schematic flowchart 6 of a communication method according to an embodiment of this application. The communication method is applicable to communication between an MTLF functional entity and an AnLF functional entity in the foregoing communication system.

As shown in FIG. 10, a procedure of the communication method is as follows.

S1001: The MTLF functional entity sends a first notification message to the AnLF functional entity. Correspondingly, the AnLF functional entity receives the first notification message from the MTLF functional entity.

The first notification message may have a plurality of functions. For example, the first notification message may be used to provide a model, for example, a new model or an updated model. In other words, the first notification message may be the first notification message (denoted as a message #1) or the third notification message (denoted as a message #3) in the foregoing scenario 3. For the new model and the updated model, refer to related descriptions of S502. Details are not described herein again.

The first notification message carries a first model identifier. The first model identifier indicates a first model, and the first model identifier may be at least one of the following: an ID of the first model, a URL of the first model, or an FQDN of the first model. This is not limited. For the first model identifier and the first model, refer to related descriptions of the first model identifier and the first model or the second model identifier and the second model in the scenario 3. Details are not described herein again.

It may be understood that when the first notification message is notification messages with different functions, the first model is different models. For example, when the first notification message is used to provide a new model, the first model is the new model. For another example, when the first notification message is used to provide an updated model, the first model is the updated model, for example, the first model is a model obtained by updating the second model.

S1002: The AnLF functional entity determines that the first model does not exist.

In a possible implementation, that the AnLF functional entity determines that the first model does not exist may specifically include: The AnLF functional entity may search models stored in the AnLF functional entity for the first model. If the first model does not exist in the stored models, the AnLF functional entity determines that the first model does not exist.

For example, the AnLF functional entity stores a model #4 and a model #5, and the first model is a model #6. That is, the AnLF functional entity does not store the model #6. When the AnLF functional entity does not store the model #6, the AnLF functional entity determines that the model #6 does not exist.

It may be understood that, in this case, each time after obtaining a model, the AnLF functional entity needs to store the model, to subsequently determine, based on the stored models, whether a model exists.

In another possible implementation, that the AnLF functional entity determines that the first model does not exist may specifically include: The AnLF functional entity may search model identifiers stored in the AnLF functional entity for the first model identifier. If the first model identifier does not exist in the stored model identifiers, the AnLF functional entity determines that the first model does not exist.

For example, the AnLF functional entity stores an identifier of a model #4 and an identifier of a model #5, and the first model identifier is an identifier of a model #6. That is, the AnLF functional entity does not store the identifier of the model #6. When the AnLF functional entity does not store the identifier of the model #6, the AnLF functional entity determines that the model #6 does not exist.

It may be understood that, in this case, each time after obtaining a model, the AnLF functional entity needs to store a model identifier of the model, to subsequently determine, based on the stored model identifiers, whether a model exists.

S1003: The AnLF functional entity performs an operation for obtaining the first model.

For the operation for obtaining the first model, refer to related descriptions of S503. Details are not described herein again.

Optionally, after the AnLF functional entity performs the operation for obtaining the first model, the foregoing communication method may further include: The AnLF functional entity stores the first model and/or the first model identifier. In this way, when receiving a notification message carrying the first model identifier, the AnLF functional entity may search the stored models for the first model, or search the stored model identifiers for the first model identifier, and determine, by finding the first model or the first model identifier, that the first model already exists, to avoid repeatedly obtaining the first model, and reduce overheads of the AnLF functional entity.

Optionally, the communication method may further include: The MTLF functional entity sends a second notification message to the AnLF functional entity. Correspondingly, the AnLF functional entity receives the second notification message from the MTLF functional entity. The AnLF functional entity determines that the first model exists. The AnLF functional entity skips performing the operation for obtaining the first model.

The second notification message carries the first model identifier, and is used to provide accuracy information of the first model. For details, refer to related descriptions of S805. Details are not described herein again.

After the AnLF functional entity receives the second notification message, if the AnLF functional entity determines that the first model exists, it indicates that the AnLF functional entity has obtained the first model. That is, in this case, the AnLF functional entity does not need to obtain the first model again. In this case, the AnLF functional entity skips performing the operation for obtaining the first model, that is, the AnLF functional entity does not obtain the first model. In this way, overheads of the AnLF functional entity can be reduced.

Further, that the AnLF functional entity determines that the first model exists may specifically include: The AnLF functional entity determines, based on a stored first model or first model identifier, that the first model exists. In other words, if the first model or the first model identifier has been stored, it may indicate that the AnLF functional entity has obtained the first model, that is, it may be determined that the first model exists. In this way, whether the first model exists can be accurately determined.

It may be understood that, if the AnLF functional entity does not store the first model or the first model identifier, it may indicate that the AnLF functional entity has not obtained the first model. In this case, the AnLF functional entity needs to obtain the first model, that is, the AnLF functional entity needs to perform the operation for obtaining the first model.

Optionally, the first notification message further carries the first accuracy information of the first model. For the first accuracy information, refer to related descriptions of S802. Details are not described herein again.

Further, when it is determined that the first model does not exist, the communication method may further include: The AnLF functional entity obtains the first accuracy information. For details, refer to related content of the embodiment shown in FIG. 9. Details are not described herein again.

Further, when it is determined that the first model does not exist, the communication method may further include: The AnLF functional entity determines that the first notification message is a message indicating the accuracy information of the first model. For details, refer to related content of the embodiment shown in FIG. 9. Details are not described herein again.

Further, that the AnLF functional entity determines that the first notification message is the message indicating the accuracy information of the first model may specifically include: The AnLF functional entity obtains only the first accuracy information. For details, refer to related content of the embodiment shown in FIG. 9. Details are not described herein again.

In conclusion, in this embodiment of this application, after receiving the first notification message, the AnLF functional entity may determine, by determining whether the first model exists, whether to obtain the first model. For example, the AnLF functional entity does not repeatedly obtain the first model when determining that the first model exists; or the AnLF functional entity obtains the first model only when determining that the first model does not exist. In this way, flexibility and effectiveness of obtaining the model by the AnLF functional entity can be improved.

For example, FIG. 11 is a schematic flowchart 7 of a communication method according to an embodiment of this application. The communication method is applicable to communication between an MTLF functional entity and an AnLF functional entity in the foregoing communication system.

As shown in FIG. 11, a procedure of the communication method is as follows.

S1101: The MTLF functional entity sends a first notification message to the AnLF functional entity. Correspondingly, the AnLF functional entity receives the first notification message from the MTLF functional entity.

The first notification message carries a first model identifier, and the first model identifier indicates a first model.

For a specific implementation principle of S1101, refer to related descriptions of S901. Details are not described again.

S1102: The MTLF functional entity determines a second notification message.

The second notification message is used to provide an updated model, namely, a second model (described below), or the second notification message is used to provide accuracy information of the first model. The second notification message carries a second model identifier, and the second model identifier may be at least one of the following: an ID of the second model, a URL of the second model, or an FQDN of the second model. This is not limited. The second model identifier indicates the second model. For details, refer to the foregoing related descriptions. Details are not described herein again.

The second model may be different from or the same as the first model. Whether the second model is the same as or different from the first model is related to a function of the second notification message. The following provides descriptions in different cases.

Case 11.1: The second model is different from the first model.

In this case, the second model is a model obtained by updating the first model, that is, the second model may be a model re-trained based on the first model, or the second model may be a newly generated model. In other words, the second notification message is used to provide the updated model, namely, the second model. In this case, the second model identifier is different from the first model identifier, that is, a difference between the model identifiers indicate the updated model, that is, different model identifiers correspond to different models. In other words, after receiving the second notification message, the AnLF functional entity may determine, based on the second model identifier carried in the second notification message being different from the first model identifier, that the second model is the updated model. That is, in this case, the AnLF functional entity may obtain the second model.

Case 11.2: The second model is the same as the first model.

In this case, the first model is not updated, and the second notification message is used to provide the accuracy information of the first model. In this embodiment of this application, different models correspond to different model identifiers, and the AnLF functional entity determines, based on whether the model identifiers are the same or different, whether to obtain the model. Therefore, in this case, the second model identifier is the same as the first model identifier.

After updating the first model, or after determining the accuracy information of the first model, the MTLF functional entity may determine the second notification message. In addition, after the first model is updated, the second model identifier may be carried in the second notification message; or after the accuracy information of the first model is determined, the first model identifier may be carried in the second notification message.

S1103: The MTLF functional entity sends the second notification message to the AnLF functional entity. Correspondingly, the AnLF functional entity receives the second notification message from the MTLF functional entity.

Optionally, when the second model identifier is the URL of the second model, before the MTLF functional entity sends the second notification message to the AnLF functional entity, the communication method may further include: The MTLF functional entity sends, to an ADRF functional entity, a request for requesting to configure the URL for the second model. Correspondingly, the ADRF functional entity receives, from the MTLF functional entity, the request for requesting to configure the URL for the second model. The ADRF functional entity configures the URL for the second model based on the request for requesting to configure the URL for the second model. The URL of the second model is different from the URL of the first model, and the second model is the model obtained by updating the first model.

It can be learned that when a model identifier is a URL of a model, the ADRF functional entity may configure different URLs for different models. In this way, the AnLF functional entity may determine, based on the URL of the model, whether the model corresponding to the model identifier is updated, that is, whether the model needs to be obtained.

S1104: When the second model identifier is different from the first model identifier, the AnLF functional entity performs an operation for obtaining the second model; or when the second model identifier is the same as the first model identifier, the AnLF functional entity skips performing the operation for obtaining the first model.

After receiving the second notification message, the AnLF functional entity may determine, based on whether the second model identifier is the same as the first model identifier, whether the second model exists, that is, whether to obtain the second model. If the second model identifier is different from the first model identifier, it indicates that the second notification message provides the updated model, namely, the second model. In this case, the AnLF functional entity needs to obtain the second model, that is, the AnLF functional entity performs the operation for obtaining the second model. If the second model identifier is the same as the first model identifier, it indicates that the second notification message provides the accuracy information of the first model. In this case, the AnLF functional entity does not need to repeatedly obtain the first model, that is, the AnLF functional entity skips performing the operation for obtaining the first model.

A principle of determining, by the AnLF functional entity, whether the second model exists is similar to a principle of determining, by the AnLF functional entity, whether the first model exists. For details, refer to related content of the embodiment shown in FIG. 9. Details are not described herein again.

In conclusion, in this embodiment of this application, different model identifiers may indicate different models, so that when receiving a model identifier carried in a notification message, the AnLF functional entity may determine, based on the model identifier, whether a model corresponding to the model identifier exists, and further determine whether to obtain the model. In this way, the AnLF functional entity can be prevented from repeatedly obtaining the model when the model does not need to be obtained, to improve flexibility and effectiveness of obtaining the first model by the AnLF functional entity, and reduce overheads of the AnLF functional entity.

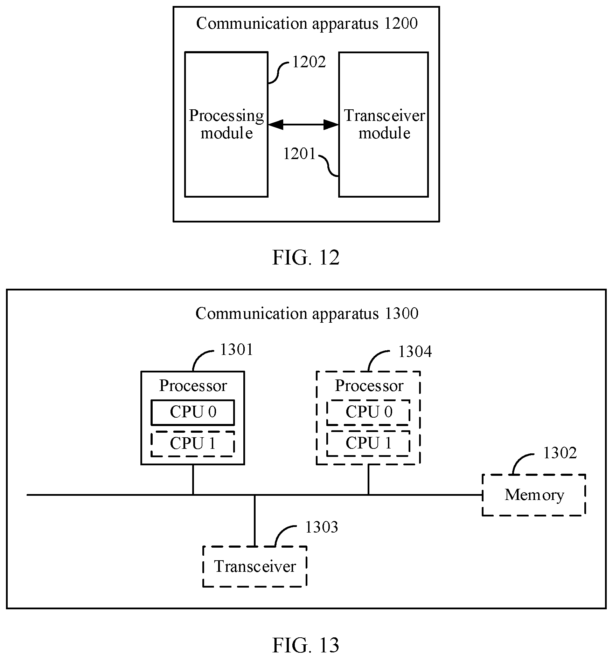

FIG. 12 is a diagram 1 of a structure of a communication apparatus according to an embodiment of this application. For example, as shown in FIG. 12, the communication apparatus 1200 includes a transceiver module 1201 and a processing module 1202. For ease of descriptions, FIG. 12 shows only main parts of the communication apparatus.

In some embodiments, the communication apparatus 1200 may be used in the communication system shown in FIG. 4, and perform functions of the AnLF functional entity in the method shown in FIG. 7.

The transceiver module 1201 is configured to receive a first notification message from an MTLF functional entity. The first notification message carries a model identifier, and the model identifier indicates a first model. The processing module 1202 is configured to: when the first notification message further carries first indication information, perform an operation for obtaining the first model. The first indication information indicates that the first model is updated, or the first indication information indicates that the MTLF functional entity provides the first model.

In a possible design solution, the processing module 1202 is further configured to skip performing the operation for obtaining the first model when the first notification message does not carry the first indication information.

In a possible design solution, the processing module 1202 is specifically configured to skip performing the operation for obtaining the first model when the first notification message does not carry the first indication information or indication information indicating a message type is a model delivery notification message either.

In a possible design solution, that the first indication information indicates that the first model is updated specifically includes: The first indication information indicates that a message type of the first notification message is a model update notification message.

Optionally, the processing module 1202 is specifically configured to: determine, based on the first indication information, that the message type of the first notification message is the model update notification message; and perform, based on the model identifier and the message type of the first notification message being the model update notification message, the operation for obtaining the first model.

In a possible design solution, the transceiver module 1201 is further configured to receive a second notification message from the MTLF functional entity. The second notification message carries the model identifier and second indication information, and the second indication information indicates that a message type of the second notification message is a model delivery notification message.

Optionally, after the AnLF functional entity receives the second notification message from the MTLF functional entity, the processing module 1202 is further configured to: determine, based on the second indication information, that the message type of the second notification message is the model delivery notification message; and perform, based on the model identifier and the message type of the second notification message being the model delivery notification message, the operation for obtaining the first model.

In a possible design solution, the transceiver module 1201 is further configured to receive a third notification message from the MTLF functional entity. The third notification message carries the model identifier and third indication information, and the third indication information indicates that a message type of the third notification message is a model accuracy notification message. The processing module 1202 is further configured to skip performing, based on the third indication information, the operation for obtaining the first model.

In a possible design solution, the operation for obtaining the first model is sending a request message for obtaining the first model.

In a possible design solution, the first model is a model obtained by updating a second model, the model identifier of the first model is the same as a model identifier of the second model, and the first model is a model re-trained based on the second model, or the first model is a newly generated model.

In a possible design solution, the model identifier is an ID and/or a URL that are/is of the first model.

Optionally, the transceiver module 1201 may include a sending module (not shown in FIG. 12) and a receiving module (not shown in FIG. 12). The sending module is configured to implement a sending function of the communication apparatus 1200, and the receiving module is configured to implement a receiving function of the communication apparatus 1200.

Optionally, the communication apparatus 1200 may further include a storage module (not shown in FIG. 12). The storage module stores a program or instructions. When the processing module 1202 executes the program or the instructions, the communication apparatus 1200 is caused to perform the functions of the AnLF functional entity in the method shown in FIG. 7 in the foregoing methods.

It may be understood that the communication apparatus 1200 may be a network device, or may be a chip (system) or another part or component that may be disposed in the network device, or may be an apparatus containing the network device. This is not limited in this application.

In addition, for technical effects of the communication apparatus 1200, refer to the technical effects of the communication method shown in FIG. 7. Details are not described herein again.

In some other embodiments, the communication apparatus 1200 may be used in the communication system shown in FIG. 4, and perform functions of the MTLF functional entity in the method shown in FIG. 7.

The processing module 1202 is configured to obtain a first notification message. The first notification message carries a model identifier, and the model identifier indicates a first model. The transceiver module 1201 is configured to send the first notification message to an AnLF functional entity. When the first model is updated, the first notification message carries first indication information, and the first indication information indicates that the first model is updated; or when the MTLF functional entity provides the first model, the first notification message carries first indication information, and the first indication information indicates that the MTLF functional entity provides the first model.

In a possible design solution, when the first model is not updated, a second notification message does not carry the first indication information; or when the MTLF functional entity does not provide the first model, a second notification message does not carry the first indication information.

In a possible design solution, that the first indication information indicates that the first model is updated specifically includes: The first indication information indicates that a message type of the first notification message is a model update notification message.

In a possible design solution, the transceiver module 1201 is further configured to send the second notification message to the AnLF functional entity. The second notification message carries the model identifier and second indication information, and the second indication information indicates that a message type of the second notification message is a model delivery notification message.

In a possible design solution, the transceiver module 1201 is further configured to send a third notification message to the AnLF functional entity. The third notification message carries the model identifier and third indication information, and the third indication information indicates that a message type of the third notification message is a model accuracy notification message.

In a possible design solution, the first model is a model obtained by updating a second model, the model identifier of the first model is the same as a model identifier of the second model, and the first model is a model re-trained based on the second model, or the first model is a newly generated model.

In a possible design solution, the model identifier is an ID and/or a uniform resource locator URL that are/is of the first model.

Optionally, the transceiver module 1201 may include a sending module (not shown in FIG. 12) and a receiving module (not shown in FIG. 12). The sending module is configured to implement a sending function of the communication apparatus 1200, and the receiving module is configured to implement a receiving function of the communication apparatus 1200.

Optionally, the communication apparatus 1200 may further include a storage module (not shown in FIG. 12). The storage module stores a program or instructions. When the processing module 1202 executes the program or the instructions, the communication apparatus 1200 is caused to perform the functions of the MTLF functional entity in the method shown in FIG. 7 in the foregoing methods.

It may be understood that the communication apparatus 1200 may be a network device, or may be a chip (system) or another part or component that may be disposed in the network device, or may be an apparatus containing the network device. This is not limited in this application.

In addition, for technical effects of the communication apparatus 1200, refer to the technical effects of the communication method shown in FIG. 7. Details are not described herein again.

FIG. 13 is a diagram 2 of a structure of a communication apparatus according to an embodiment of this application. For example, the communication apparatus may be a terminal, or may be a chip (system) or another part or component that may be disposed in the terminal. As shown in FIG. 13, the communication apparatus 1300 may include a processor 1301. Optionally, the communication apparatus 1300 may further include a memory 1302 and/or a transceiver 1303. The processor 1301 is coupled to the memory 1302 and the transceiver 1303, for example, may be connected to the memory 1302 and the transceiver 1303 through a communication bus.

The following specifically describes each part of the communication apparatus 1300 with reference to FIG. 13.

The processor 1301 is a control center of the communication apparatus 1300, and may be one processor, or may be a collective term of a plurality of processing elements. For example, the processor 1301 is one or more central processing units (central processing units, CPUs), or may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

Optionally, the processor 1301 may perform various functions of the communication apparatus 1300 by running or executing a software program stored in the memory 1302 and invoking data stored in the memory 1302, for example, perform the communication methods shown in FIG. 5 to FIG. 11.

During specific implementation, in an embodiment, the processor 1301 may include one or more CPUs, such as a CPU 0 and a CPU 1 shown in FIG. 13.

During specific implementation, in an embodiment, the communication apparatus 1300 may alternatively include a plurality of processors, for example, the processor 1301 and a processor 1304 shown in FIG. 13. Each of the processors may be a single-core processor (single-CPU), or may be a multi-core processor (multi-CPU). The processor herein may be one or more devices, circuits, and/or processing cores configured to process data (for example, computer program instructions).

The memory 1302 is configured to store the software program for executing the solutions in this application, and the processor 1301 controls execution. For a specific implementation, refer to the foregoing method embodiments. Details are not described herein again.

Optionally, the memory 1302 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer, but is not limited thereto. The memory 1302 may be integrated with the processor 1301, or may exist independently, and is coupled to the processor 1301 through an interface circuit (not shown in FIG. 13) of the communication apparatus 1300. This is not specifically limited in this embodiment of this application.

The transceiver 1303 is configured to communicate with another communication apparatus. For example, the communication apparatus 1300 is a terminal, and the transceiver 1303 may be configured to communicate with a network device or communicate with another terminal device. For another example, the communication apparatus 1300 is a network device, and the transceiver 1303 may be configured to communicate with a terminal or communicate with another network device.

Optionally, the transceiver 1303 may include a receiver and a transmitter (not separately shown in FIG. 13). The receiver is configured to implement a receiving function, and the transmitter is configured to implement a sending function.

Optionally, the transceiver 1303 may be integrated with the processor 1301, or may exist independently, and is coupled to the processor 1301 through an interface circuit (not shown in FIG. 13) of the communication apparatus 1300. This is not specifically limited in this embodiment of this application.

It may be understood that the structure of the communication apparatus 1300 shown in FIG. 13 does not constitute a limitation on the communication apparatus. An actual communication apparatus may include more or fewer parts than those shown in the figure, or a combination of some parts, or an arrangement of different parts.

In addition, for technical effects of the communication apparatus 1300, refer to the technical effects of the methods in the foregoing method embodiments. Details are not described herein again.

An embodiment of this application further provides a communication chip. The communication chip stores instructions. When the chip runs on a communication device, the method provided in embodiments of this application is implemented.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or a part of the foregoing embodiments may be implemented using software, hardware (for example, circuit), firmware, or any combination thereof. When the software is used for implementation, the foregoing embodiments may be implemented completely or partially in a form of a computer program product. The computer program product includes one or more computer instructions or computer programs. When the computer instructions or the computer programs are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof means any combination of these items, including a singular item (piece) or any combination of plural items (pieces). For example, at least one (piece) of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computer device (which may be a personal computer, a server, a network device, or the like) to perform all or a part of the steps of the methods described in embodiments of this application. The foregoing storage medium includes various media that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving, by an analytics logical function AnLF functional entity, a first notification message from a model training logical function MTLF functional entity, wherein the first notification message carries a model identifier, and the model identifier indicates a first model; and
performing, by the AnLF functional entity, an operation for obtaining the first model when the first notification message further carries first indication information, wherein the first indication information indicates that the first model is updated, or the first indication information indicates that the MTLF functional entity provides the first model.

2. The method according to claim 1, wherein the first indication information further indicates that the MTLF functional entity provides a new model or an updated model.

3. The method according to claim 1 or 2, wherein before the receiving, by the AnLF functional entity, the first notification message from the MTLF functional entity, the method further comprises:
obtaining a second model, wherein a model identifier of the second model is provided by the MTLF functional entity.

4. The method according to claim 3, wherein the obtaining the second model comprises:
receiving, by the AnLF functional entity from the MTLF functional entity, a message that carries the model identifier indicating the second model; and
obtaining, by the AnLF functional entity, the second model based on the model identifier indicating the second model.

5. The method according to claim 3 or 4, wherein the method further comprises:
receiving model accuracy information of the second model from the MTLF functional entity.

6. The method according to any one of claims 1 to 5, wherein the method further comprises:
receiving model accuracy information of the first model from the MTLF functional entity.

7. The method according to any one of claims 1 to 6, wherein the method further comprises:
skipping performing, by the AnLF functional entity, the operation for obtaining the first model when the first notification message does not carry the first indication information.

8. The method according to claim 7, wherein the skipping performing, by the AnLF functional entity, the operation for obtaining the first model when the first notification message does not carry the first indication information comprises:
skipping performing, by the AnLF functional entity, the operation for obtaining the first model when the first notification message does not carry the first indication information or indication information indicating that a message type is a model delivery notification message.

9. The method according to any one of claims 1 to 8, wherein that the first indication information indicates that the first model is updated specifically comprises: the first indication information indicates that a message type of the first notification message is a model update notification message.

10. The method according to claim 9, wherein the performing, by the AnLF functional entity, the operation for obtaining the first model when the first notification message carries the first indication information comprises:
determining, by the AnLF functional entity based on the first indication information, that the message type of the first notification message is the model update notification message; and
performing, by the AnLF functional entity based on the model identifier and the message type of the first notification message being the model update notification message, the operation for obtaining the first model.

11. The method according to any one of claims 1 to 10, wherein the method further comprises:
receiving, by the AnLF functional entity, a second notification message from the MTLF functional entity, wherein the second notification message carries the model identifier and second indication information, and the second indication information indicates that a message type of the second notification message is a model delivery notification message.

12. The method according to claim 11, wherein after the receiving, by the AnLF functional entity, the second notification message from the MTLF functional entity, the method further comprises:
determining, by the AnLF functional entity based on the second indication information, that the message type of the second notification message is the model delivery notification message; and
performing, by the AnLF functional entity based on the model identifier and the message type of the second notification message being the model delivery notification message, the operation for obtaining the first model.

13. The method according to any one of claims 1 to 12, wherein the method further comprises:
receiving, by the AnLF functional entity, a third notification message from the MTLF functional entity, wherein the third notification message carries the model identifier and third indication information, and the third indication information indicates that a message type of the third notification message is a model accuracy notification message; and
skipping performing, by the AnLF functional entity based on the third indication information, the operation for obtaining the first model.

14. The method according to any one of claims 1 to 13, wherein the operation for obtaining the first model is sending a request message for obtaining the first model.

15. The method according to any one of claims 1 to 14, wherein the first model is a model obtained by updating the second model, the model identifier of the first model is the same as the model identifier of the second model, and the first model is a model re-trained based on the second model, or the first model is a newly generated model.

16. The method according to any one of claims 1 to 15, wherein the model identifier is an ID and/or a uniform resource locator URL that are/is of the first model.

17. A communication method, wherein the method comprises:
obtaining, by a model training logical function MTLF functional entity, a first notification message, wherein the first notification message carries a model identifier, and the model identifier indicates a first model; and
sending, by the MTLF functional entity, the first notification message to an analytics logical function AnLF functional entity, wherein
when the first model is updated, the first notification message carries first indication information, and the first indication information indicates that the first model is updated; or when the MTLF functional entity provides the first model, the first notification message carries first indication information, and the first indication information indicates that the MTLF functional entity provides the first model.

18. The method according to claim 17, wherein the first indication information further indicates that the MTLF functional entity provides a new model or an updated model.

19. The method according to claim 17 or 18, wherein the method further comprises:
sending, to the AnLF functional entity, a message that carries a model identifier indicating a second model.

20. The method according to claim 19, wherein the method further comprises:
sending model accuracy information of the second model to the AnLF functional entity.

21. The method according to any one of claims 17 to 20, wherein the method further comprises:
sending model accuracy information of the first model to the AnLF functional entity.

22. The method according to any one of claims 17 to 21, wherein when the first model is not updated, the first notification message does not carry the first indication information; or
when the MTLF functional entity does not provide the first model, the first notification message does not carry the first indication information.

23. The method according to any one of claims 17 to 22, wherein that the first indication information indicates that the first model is updated specifically comprises: the first indication information indicates that a message type of the first notification message is a model update notification message.

24. The method according to any one of claims 17 to 23, wherein the method further comprises:
sending, by the MTLF functional entity, a second notification message to the AnLF functional entity, wherein the second notification message carries the model identifier and second indication information, and the second indication information indicates that a message type of the second notification message is a model delivery notification message.

25. The method according to any one of claims 17 to 24, wherein the method further comprises:
sending, by the MTLF functional entity, a third notification message to the AnLF functional entity, wherein the third notification message carries the model identifier and third indication information, and the third indication information indicates that a message type of the third notification message is a model accuracy notification message.

26. The method according to any one of claims 17 to 25, wherein the first model is a model obtained by updating the second model, the model identifier of the first model is the same as the model identifier of the second model, and the first model is a model re-trained based on the second model, or the first model is a newly generated model.

27. The method according to any one of claims 17 to 26, wherein the model identifier is an ID and/or a uniform resource locator URL that are/is of the first model.

28. A communication apparatus, wherein the apparatus comprises a module configured to perform the method according to any one of claims 1 to 27.

29. A communication apparatus, wherein the communication apparatus comprises a processor and a memory, the memory is configured to store computer instructions, and when the processor executes the instructions, the communication apparatus is caused to perform the method according to any one of claims 1 to 27.

30. A communication system, wherein the communication system comprises at least one of the following: an analytics logical function AnLF functional entity configured to perform the method according to any one of claims 1 to 16, and a model training logical function MTLF functional entity configured to perform the method according to any one of claims 17 to 27.

31. A communication chip, wherein the communication chip stores instructions, and when the chip runs on a communication device, the method according to any one of claims 1 to 27 is implemented.

32. A computer-readable storage medium, wherein the computer-readable storage medium comprises a computer program or instructions, and when the computer program or the instructions are run on a computer, the computer is caused to perform the method according to any one of claims 1 to 27.

33. A computer program product, wherein the computer program product comprises a computer program or instructions, and when the computer program or the instructions are run on a communication apparatus, the method according to any one of claims 1 to 27 is performed.
